# EUROPEAN PATENT APPLICATION

(11) **EP 4 443 974 A1**
(43) Date of publication of application: **09.10.2024**
(21) Application number: 22914397.9
(22) Date of filing: 20.12.2022
(51) Int. Cl.: H04W 36/34, H04W 48/08

(54) **CELL RESELECTION METHOD AND RELATED APPARATUS**

(30) Priority: 30.12.2021 CN 202111662768
(71) Applicant: Huawei Technologies Co., Ltd., Shenzhen, Guangdong 518129 (CN)
(72) Inventor: ZHANG, Roujia, Shenzhen, Guangdong 518129 (CN); SUN, Fei, Shenzhen, Guangdong 518129 (CN); LI, Jiaojiao, Shenzhen, Guangdong 518129 (CN)
(74) Representative: Körber, Martin Hans
(86) International application number: PCT/CN2022/140328
(87) International publication number: WO 2023/125143

(57) **Abstract**

This application discloses a cell reselection method and a related apparatus. In the method, a terminal device determines at least one first slice group and a first tracking area TA of each first slice group (S101), where the first slice group is a slice group including a network slice that the terminal device intends to access; the terminal device performs neighboring cell measurement based on a priority of each first TA and a frequency priority corresponding to each first slice group, to obtain a target cell that meets a cell reselection condition (S102); and the terminal device determines, based on a second TA, whether to camp on the target cell (S103), where the second TA is a first TA of a second slice group, and the second slice group is a first slice group corresponding to the frequency priority used for neighboring cell measurement through which the target cell is obtained. It can be learned that, according to the method, cell reselection performed based on a slice group configured at a TA granularity can be implemented, so that signaling overheads are reduced in comparison with a method for performing cell reselection based on a network slice.

## Description

This application claims priority to Chinese Patent Application No. 202111662768.1, filed with the China National Intellectual Property Administration on December 30, 2021 and entitled "CELL RESELECTION METHOD AND RELATED APPARATUS", which is incorporated herein by reference in its entirety.

### TECHNICAL FIELD

This application relates to the field of communication technologies, and in particular, to a cell reselection method and a related apparatus.

### BACKGROUND

With development of mobile communication technologies, various new services and application scenarios continuously emerge, and these services have differentiated requirements on network functions, connection performance, security, and the like. Therefore, end-to-end network slicing (Network Slicing) is used to provide customized network services for users to meet requirements of various new services such as high bandwidth, low latency, and high reliability. To enable a terminal device to perform network slice-specific cell reselection, network slice-specific cell reselection priority and the like may be carried in a system broadcast message of a cell. However, this causes high overheads of the system broadcast message. In view of this, a concept of a slice group (Slice Group) is proposed to reduce overheads. In this way, only supported slice group information and the like can be carried in the system broadcast message of the cell, so that the overheads are reduced.

Because a coding length of a slice group identifier is limited, different slice groups may be identified by a same identifier for different tracking areas (tracking areas, TAs). Therefore, how to perform cell reselection in a case that a slice group is configured at a TA granularity is an urgent problem to be resolved.

### SUMMARY

This application provides a cell reselection method and a related apparatus, to perform cell reselection based on a slice group configured at a TA granularity, and reduce signaling overheads required for cell reselection.

According to a first aspect, this application provides a cell reselection method. In the method, a terminal device determines at least one first slice group and a first tracking area TA of each first slice group, where the first slice group is a slice group including a network slice that the terminal device intends to access; the terminal device performs neighboring cell measurement based on a priority of each first TA and a frequency priority corresponding to each first slice group, to obtain a target cell that meets a cell reselection condition; and the terminal device determines, based on a second TA, whether to camp on the target cell, where the second TA is a first TA of a second slice group, and the second slice group is a first slice group corresponding to the frequency priority used for neighboring cell measurement through which the target cell is obtained.

The priority of each first TA may be determined based on a quantity of slices included in the first slice group of the first TA or priority information of a slice included in the first slice group of the first TA. For example, a larger quantity of slices included in the first slice group indicates a higher priority of the first TA in the first slice group; or a higher priority of a slice included in the first slice group indicates a higher priority of the first TA in the first slice group. Alternatively, in at least one first TA, a priority of a TA on which the terminal device currently camps is highest, or the like. This is not limited in this application.

It can be learned that, according to the cell reselection method, cell reselection can be performed based on a slice group configured at a TA granularity, so that information overheads carried in a broadcast system message are reduced in comparison with a network slice-based cell reselection method.

In an optional implementation, the at least one first slice group and the first TA of each first slice group are determined by a non-access stratum NAS of the terminal device and forwarded to an access stratum AS of the terminal device.

In an optional implementation, that the terminal device determines the at least one first slice group and the first TA of each first slice group includes: The terminal device receives slice group configuration information from a core network via the NAS, where the slice group configuration information includes a slice group of each of a plurality of TAs and a network slice included in the slice group; the terminal device determines the at least one first slice group and the first TA of each first slice group from the plurality of TAs and the slice group of each TA via the NAS based on a network slice group that the terminal device intends to access; and the terminal device forwards the at least one first slice group and the first TA of each first slice group to the AS of the terminal device via the NAS.

In an optional implementation, the at least one first slice group and the first TA of each first slice group are determined by an access stratum AS of the terminal device.

In an optional implementation, that the terminal device determines the at least one first slice group and the first TA of each first slice group includes: The terminal device receives slice group configuration information from a core network via a NAS, where the slice group configuration information includes a slice group in each of a plurality of TAs and a network slice included in the slice group; the terminal device forwards, to the AS of the terminal device via the NAS, the slice group configuration information and a network slice that is intended to be accessed; and the terminal device determines the at least one first slice group and the first TA of each first slice group from the plurality of TAs and the slice group of each TA via the AS.

In an optional implementation, the frequency priority corresponding to each first slice group is obtained based on slice information from an access network, where the slice information includes a slice group that is capable of being supported on each frequency and a frequency priority of each frequency corresponding to each slice group.

In another optional implementation, when the frequency has a plurality of frequency priorities corresponding to a same slice group in the slice information, a frequency priority corresponding to the first slice group on the frequency is determined based on the plurality of frequency priorities. It can be learned that, even if the slice information is not bound to TA information, the frequency priority of each frequency corresponding to each slice group may be obtained through derivation, to avoid misunderstanding of the terminal device.

In still another optional implementation, the slice information further includes a TA of each slice group. In this way, a frequency priority of a same frequency for the first slice group in the slice information is unique.

In an optional implementation, that the terminal device determines, based on the second TA, whether to camp on the target cell includes: When the second TA is the same as a TA identified by a tracking area code TAC broadcast by the target cell, the terminal device determines to camp on the target cell; or when the second TA is different from a TA identified by a tracking area code TAC broadcast by the target cell, the terminal device determines not to camp on the target cell.

In another optional implementation, when the slice information further includes a cell identifier list that corresponds to each frequency and that is capable of supporting each slice group, that the terminal device determines, based on the second TA, whether to camp on the target cell includes: When a cell identifier of the target cell is included in a first cell identifier list, the terminal device determines to camp on the target cell; or when a cell identifier of the target cell is not included in a first cell identifier list, the terminal device determines not to camp on the target cell, where the first cell identifier list is a cell identifier list that has a same frequency as the target cell and that is capable of supporting the second slice group.

In still another optional implementation, that the terminal device determines, based on the second TA, whether to camp on the target cell includes: When a TA identified by a tracking area code TAC broadcast by the target cell is the second TA or an equivalent TA of the second TA, the terminal device determines to camp on the target cell; or when a TA identified by a tracking area code TAC broadcast by the target cell is not the second TA or an equivalent TA of the second TA, the terminal device determines not to camp on the target cell, where the equivalent TA of the second TA is the first TA of the first slice group that is the same as the second slice group.

In yet another optional implementation, when the slice information further includes a cell identifier list that corresponds to each frequency and that is capable of supporting each slice group, that the terminal device determines, based on the second TA, whether to camp on the target cell includes: When a cell identifier of the target cell is included in a first cell identifier list, and the second TA is the same as a TA identified by a tracking area code TAC broadcast by the target cell, the terminal device determines to camp on the target cell; or when a cell identifier of the target cell is not included in a first cell identifier list, or the second TA is different from a TA identified by a tracking area code TAC broadcast by the target cell, the terminal device determines not to camp on the target cell, where the first cell identifier list is a cell identifier list that has a same frequency as the target cell and that is capable of supporting the second slice group.

In still yet another optional implementation, when the slice information further includes a cell identifier list that corresponds to each frequency and that is capable of supporting each slice group, that the terminal device determines, based on the second TA, whether to camp on the target cell includes: When a cell identifier of the target cell is included in a first cell identifier list, and a TA identified by a TAC broadcast by the target cell is the second TA or an equivalent TA of the second TA, the terminal device determines to camp on the target cell; or when a cell identifier of the target cell is not included in a first cell identifier list, or a TA identified by a TAC broadcast by the target cell is not the second TA or an equivalent TA of the second TA, the terminal device determines not to camp on the target cell, where the first cell identifier list is a cell identifier list that has a same frequency as the target cell and that is capable of supporting the second slice group.

According to a second aspect, this application further provides a cell reselection method. In the method, an access network device determines slice information, where the slice information includes a slice group that is capable of being supported on each frequency, a frequency priority of each frequency corresponding to each slice group, and a tracking area TA of each slice group; and the access network device sends the slice information to a terminal device, where the slice information is used to assist the terminal device in performing cell reselection for a network slice.

It can be learned that, in the method, the terminal device may assist, based on the slice information provided by the access network, the terminal device in performing cell reselection based on a slice group configured at a TA granularity. This helps reduce signaling overheads required for cell reselection.

In an optional implementation, the slice information further includes a cell identifier list that corresponds to each frequency and that is capable of supporting each slice group.

In an optional implementation, the cell reselection method further includes: The access network device receives slice group information from a network management device, where the slice group information indicates a network slice included in each slice group; the access network device binds a TA identifier to each slice group to obtain slice group configuration information, where the slice group configuration information includes a slice group of each TA and a network slice included in the slice group; and the access network device sends the slice group configuration information to the core network, where the slice group configuration information is used to assist the terminal device in performing cell reselection based on the slice information and a network slice that the terminal device intends to access.

According to a third aspect, this application further provides a cell reselection method. In the method, a core network device receives slice group configuration information from a network management device or an access network device, where the slice group configuration information includes a slice group of each TA and a network slice included in the slice group; and the core network device sends a non-access stratum NAS message to a terminal device, where the NAS message carries the slice group configuration information, and the slice group configuration information is used to assist the terminal device in performing cell reselection based on the slice information and a network slice that is intended to be accessed.

It can be learned that, in the method, the terminal device may assist, based on the slice group configuration information provided by the core network or the slice group configuration information provided by the access network, the terminal device in performing cell reselection based on a slice group configured at a TA granularity. This helps reduce signaling overheads required for cell reselection.

According to a fourth aspect, this application provides a communication apparatus. The apparatus may be a terminal device, an apparatus in the terminal device, or an apparatus that can be used together with the terminal device. The communication apparatus may alternatively be a chip system. The communication apparatus may perform the method according to the first aspect. Functions of the communication apparatus may be implemented by hardware, or may be implemented by executing corresponding software by hardware. The hardware or the software includes one or more units or modules corresponding to the foregoing functions. The unit or module may be software and/or hardware. For operations performed by the communication apparatus and beneficial effects thereof, refer to the method according to the first aspect and the beneficial effects thereof.

According to a fifth aspect, this application provides a communication apparatus. The communication apparatus may be an access network device. The communication apparatus may alternatively be a chip system. The communication apparatus may perform the method according to the second aspect. Functions of the communication apparatus may be implemented by hardware, or may be implemented by executing corresponding software by hardware. The hardware or the software includes one or more units or modules corresponding to the foregoing functions. The unit or module may be software and/or hardware. For operations performed by the communication apparatus and beneficial effects thereof, refer to the method according to the second aspect and the beneficial effects thereof.

According to a sixth aspect, this application provides a communication apparatus. The communication apparatus may be a core network device. The communication apparatus may alternatively be a chip system. The communication apparatus may perform the method in the third aspect. Functions of the communication apparatus may be implemented by hardware, or may be implemented by executing corresponding software by hardware. The hardware or the software includes one or more units or modules corresponding to the foregoing functions. The unit or module may be software and/or hardware. For operations performed by the communication apparatus and beneficial effects thereof, refer to the method according to the third aspect and the beneficial effects thereof.

According to a seventh aspect, this application provides a computer-readable storage medium. The storage medium stores instructions, and when the computer program or the instructions is/are executed by a communication apparatus, the method according to any one of the first aspect to the third aspect is implemented.

According to an eighth aspect, this application provides a computer program product including instructions. When a communication apparatus reads and executes the instructions, the communication apparatus is enabled to perform the method according to any one of the first aspect to the third aspect.

According to a ninth aspect, this application provides a communication system, including at least one communication apparatus configured to perform the method in the first aspect, at least one communication apparatus configured to perform the method in the second aspect, and at least one communication apparatus configured to perform the method in the third aspect.

### BRIEF DESCRIPTION OF DRAWINGS

FIG. 1 is a diagram of a structure of a communication system according to an embodiment of this application;
FIG. 2 is a diagram of a type of slice group configuration information according to an embodiment of this application;
FIG. 3 is a diagram of another type of slice group configuration information according to an embodiment of this application;
FIG. 4 is a schematic flowchart of a cell reselection method according to an embodiment of this application;
FIG. 5 is a diagram of another cell reselection method according to an embodiment of this application;
FIG. 6 is a diagram of a structure of a communication apparatus according to an embodiment of this application; and
FIG. 7 is a diagram of a structure of another communication apparatus according to an embodiment of this application.

### DESCRIPTION OF EMBODIMENTS

The following describes in detail specific embodiments of this application with reference to the accompanying drawings.

This application may be applied to communication systems such as standalone, namely, a new base station, a backhaul link, and a core network that are deployed in a future network, or may be applied to various communication systems such as non-standalone.

For example, technical solutions of this application may be applied to a 5th generation (5th generation, 5G) system, which may also be referred to as a new radio (new radio, NR) system; or a 6th generation (6th generation, 6G) system, or a 7th generation (7th generation, 7G) system; or another future communication system; or may be alternatively applied to a device to device (device to device, D2D) system, a machine to machine (machine to machine, M2M) system, a long term evolution (long term evolution, LTE) system, a carrier aggregation (carrier aggregation, CA) system, a dual connectivity (Dual Connectivity, DC) technology system, or the like.

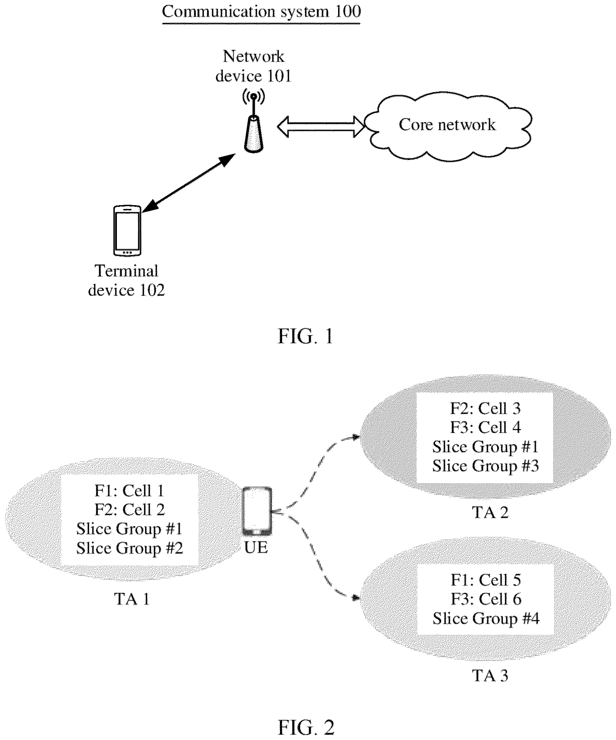

A cell reselection method in this application may be applied to, for example, but not limited to, a communication system shown in FIG. 1. FIG. 1 is a diagram of a scenario of a communication system 100. The communication system 100 may include but is not limited to one or more network devices (for example, a network device 101), one or more terminal devices (for example, a terminal device 102), a core network, and the like. The one or more network devices may schedule a same terminal device, to provide a downlink service for the terminal device or receive an uplink service from the terminal device. The core network may configure slice group configuration information. The slice group configuration information includes a slice group of each tracking area (Tracking Area, TA) and a network slice included in the slice group. Further, the core network may send a non-access stratum (Non-Access Stratum, NAS) message to the terminal device, where the NAS message carries the slice group configuration information. In addition, the network device may send slice information to the terminal device, to assist, based on the slice group configuration information, the terminal device in performing cell reselection based on a network slice that is intended to be accessed.

In embodiments of this application, the network device may be a device having a wireless transceiver function or a chip that may be disposed in the device. The network device includes but is not limited to an evolved NodeB (evolved NodeB, eNB), a radio network controller (radio network controller, RNC), a NodeB (NodeB, NB), a network device controller (base station controller, BSC), a network device transceiver station (base transceiver station, BTS), a home network device (for example, a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission and reception point (transmission and reception point, TRP), a transmission point (transmission point, TP), or the like. Alternatively, the network device may be a device used in a 5G, 6G, or even 7G system, for example, a gNB or a transmission point (a TRP or a TP) in an NR system, or one antenna panel or a group of (including a plurality of antenna panels) antenna panels of a network device in a 5G system; or may be a network node that constitutes a gNB or a transmission point, for example, a baseband unit (BBU), a distributed unit (distributed unit, DU), or a road side unit (road side unit, RSU) in a vehicle-to-everything (vehicle-to-everything, V2X) or intelligent driving scenario.

In some deployments, the gNB or the transmission point may include a central unit (central unit, CU), a DU, and the like. The gNB or the transmission point may further include a radio unit (radio unit, RU). The CU implements some functions of the gNB or the transmission point, and the DU implements some functions of the gNB or the transmission point. For example, the CU implements functions of a radio resource control (radio resource control, RRC) layer and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer eventually becomes information at the PHY layer, or is converted from the information at the PHY layer. Therefore, in the architecture, higher layer signaling like RRC layer signaling or PDCP layer signaling may also be considered as being sent by the DU or sent by the DU+RU. It may be understood that the network device may be a CU node, a DU node, or a device including a CU node and a DU node.

In addition, the CU may be classified into a network device in a radio access network (radio access network, RAN), namely, an access network device, or the CU may be classified into a network device in a core network (core network, CN), namely, a core network device for short. This is not limited herein.

In embodiments of this application, the terminal device may include but is not limited to user equipment (user equipment, UE), an access terminal device, a subscriber unit, a subscriber station, a mobile station, a mobile console, a remote station, a remote terminal device, a mobile device, a user terminal device, a user agent, a user apparatus, or the like. For another example, the terminal device may be a mobile phone, a tablet computer, a computer having a wireless transceiver function, a terminal device in virtual reality, a terminal device in augmented reality, a wireless terminal device in industrial control, a wireless terminal device in self-driving, a wireless terminal device in telemedicine, a wireless terminal device in a smart grid, a wireless terminal device in transportation security, a wireless terminal device in a smart city, a wireless terminal device in a smart home, a wireless terminal device in the foregoing V2X vehicle-to-everything, an RSU of a wireless terminal device type, or the like.

To clearly describe technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. The term "and/or" describes an association relationship for describing associated objects and indicates that three relationships may exist. For example, A and/or B may indicate the following three cases: Only A exists, both A and B exist, and only B exists. The character "/" usually indicates an "or" relationship between the associated objects.

First, related concepts in this application are described.

### 1. Network slicing (Network Slicing)

In network slicing, through flexible allocation of network resources and on-demand networking, a plurality of isolated logical subnets with different features are virtualized on a same set of physical infrastructures, to provide a targeted service for a user. These logical subnets are identified and distinguished by using single network slice selection assistance information (Single Network Slice Selection Assistance Information, S-NSSAI). Each piece of S-NSSAI may include the following content:
(1) a slice or service type (Slice/service type, SST), indicating a specific feature and service type of a network slice; and
(2) a slice differentiator (Slice Differentiator, SD), which is a supplement to the SST, may be used to further distinguish between a plurality of network slice instances that meet a same SST. The SD is optional.

There are the following types of network slices.
(1) Subscribed network slice selection assistance information (Subscribed NSSAI): which is subscription data of a terminal device.
(2) Default network slice selection assistance information (Default NSSAI): According to operators' strategy, one or more pieces of subscribed NSSAI of the terminal device may be set as default NSSAI. If the terminal device does not include an allowed network slice (Allowed NSSAI) in a registration request (Registration Request) message, a network side uses default NSSAI to provide services for the terminal device if there is the default NSSAI.
(3) Requested network slice selection assistance information (Requested NSSAI): which is allowed NSSAI included by the terminal device in the registration request (Registration Request) message or configured network slice selection assistance information (Configured NSSAI).
(4) Allowed NSSAI: For NSSAI requested by the terminal device, the network side includes an identifier of the allowed NSSAI in a registration accept (Registration Accept) message to the terminal device, to notify the terminal device of S-NSSAI(s) allowed by the network side.
(5) Configured NSSAI: which is NSSAI configured by the network side for the terminal device for use, to notify the terminal device of available S-NSSAI(s) in a network. The network side includes a configured NSSAI information element (Information Element, IE) in the registration accept (Registration Accept) message to the terminal device. If configuration of the terminal device changes after registration is performed, the network side may instruct, via a configuration update command (Configuration update command), the terminal device to update the configured NSSAI. The terminal device stores configured NSSAI configured by each network for the terminal device in non-volatile storage space. Each public land mobile network (Public Land Mobile Network, PLMN) can configure only one piece of configured NSSA.

For ease of description, in this application, a network slice is referred to as a slice for short, and a network slice that the terminal device intends to access is referred to as an intended slice. Intended slices are different for different terminal device behaviors. For example, in a cell reselection or selection process, an intended slice(s) is allowed/requested S-NSSAI(s). In an initial registration process, an intended slice(s) is requested S-NSSAI(s), that is, the intended slice(s) = requested S-NSSAI(s). In an idle state, an intended slice(s) = allowed S-NSSAI(s). For a terminal device in an inactive state, an intended slice(s) = suspended S-NSSAI(s), namely, S-NSSAI(s) related to an activated PDU session of the terminal device in the inactive state. For a mobile originated (Mobile Originated, MO) service, an intended slice is S-NSSAI related to the MO service.

### 2. Slice group

A slice group is a group of one or more slices that are identified according to a specific rule. The specific rule includes but is not limited to: performing group identification based on an SST or based on unified access control (Unified Access Control, UAC). The slices included in the slice group may be represented as a correspondence between a slice group identifier and a slice.

The correspondence between a slice group identifier and a slice is valid at a tracking area (Tracking Area, TA) granularity, that is, a TA of a slice group indicates a valid area of the slice group. Correspondingly, a slice group of a TA indicates a slice group that the TA can support or a valid slice group in the TA.

Different slice groups may be distinguished by slice group identifiers, and different TAs may be distinguished by tracking area codes (Tracking Area Codes, TACs). Because a coding length of a slice group identifier is limited, a same slice group identifier may be used in different TAs in a case that a slice group is configured at a TA granularity. In other words, a same slice group identifier in different TAs may correspond to different slices.

For ease of description, in this specification, a slice group (Intended Slice Group) determined by the terminal device and including an intended network slice is referred to as a first slice group, and correspondingly, a TA of the first slice group is referred to as a first TA.

### 3. Slice group configuration information

The slice group configuration information is notified by a core network to the terminal device via a non-access stratum (Non-Access Stratum, NAS). The slice group configuration information may be configured for a specific terminal device, or may be configured for a non-specific terminal device. This is not limited in this application. The slice group configuration information includes a slice group of each of a plurality of TAs and a slice included in the slice group; or a correspondence between each slice and each slice group and an effective TAC corresponding to the correspondence are configured in the slice group configuration information.

In this application, the slice group configuration information may include but is not limited to the following optional implementations.

Implementation 3-1: There is a duplicate slice group identifier in the slice group configuration information. To be specific, there is a same slice group identifier in different TAs, but the slice group identifier corresponds to different slices.

For example, FIG. 2 is a diagram of a type of slice group configuration information according to an embodiment of this application. As shown in FIG. 2, slice group #N indicates a slice group identifier (Slice Group ID), TA N indicates a TAC, S N indicates a slice identifier, and Cell N indicates a cell identifier. A terminal device camps on a cell in a TA 1, and a correspondence between a slice and a slice group identifier and a corresponding effective TAC are set below:
(1) frequencies covered by the TA 1 are F1 (Cell 1) and F2 (Cell 2), and a correspondence between a slice group ID and NSSAI is described as follows:
   Slice Group #1 = {S1, S4};
   Slice Group #2 = {S2, S3};
(2) frequencies covered by a TA 2 are F2 (Cell 3) and F3 (Cell 4), and a correspondence between a slice group ID and NSSAI is described as follows:
   Slice Group #1 = {S1, S2};
   Slice Group #3 = {S3, S4, S5}; and
(3) frequencies covered by a TA 3 are F1 (Cell 5) and F3 (Cell 6), and a correspondence between a slice group ID and NSSAI is described as follows:
   Slice Group #4 = {S1}.

It can be learned that, in the slice group configuration information shown in FIG. 2, there is duplicate slice group #1 between the TA 1 and the TA 2, but slice group #1 corresponds to different slices in the two TAs. A frequency covered by each TA may be obtained via other configuration information.

Implementation 3-2: In the slice group configuration information, there is a duplicate slice group identifier and a duplicate correspondence between the slice group identifier and a slice. That is, there is a same slice group identifier in different TAs, and the slice group identifier corresponds to a same slice.

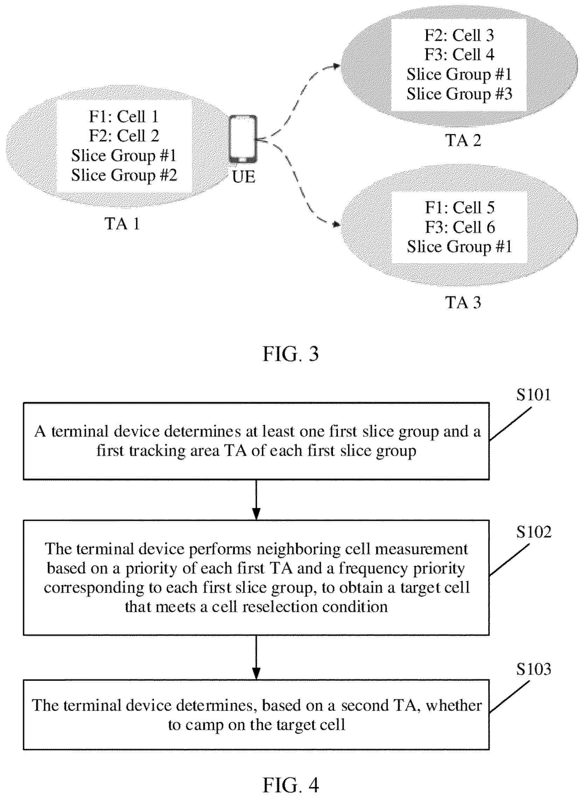

For example, FIG. 3 is a diagram of another type of slice group configuration information according to an embodiment of this application. As shown in FIG. 3, slice group #N indicates a slice group identifier (Slice Group ID), TA N indicates a TAC, S N indicates a slice identifier, and Cell N indicates a cell identifier. A terminal device camps on a cell in a TA 1, and a correspondence between a slice and a slice group identifier and a corresponding effective TAC are set below:
(1) frequencies covered by the TA 1 are F1 (Cell 1) and F2 (Cell 2), and a correspondence between a slice group ID and NSSAI is described as follows:
   Slice Group #1 = {S1, S4};
   Slice Group #2 = {S2, S3};
(2) frequencies covered by a TA 2 are F2 (Cell 3) and F3 (Cell 4), and a correspondence between a slice group ID and NSSAI is described as follows:
   Slice Group #1 = {S1};
   Slice Group #3 = {S3, S4, S5}; and
(3) frequencies covered by a TA 3 are F1 (Cell 5) and F3 (Cell 6), and a correspondence between a slice group ID and NSSAI is described as follows:
   Slice Group #1 = {S1, S4}.

It can be learned that, in the slice group configuration information shown in FIG. 3, there is duplicate slice group #1 between the TA 1 and the TA 2, but slice group #1 corresponds to different slices in the two TAs. There is duplicate slice group #1 between the TA 1 and the TA 3, and slice group #1 separately corresponds to a same slice in the two TAs. In other words, there is a duplicate slice group identifier and a duplicate correspondence between the TA 1 and the TA 3.

### 4. Slice information

The slice information includes a slice group that is capable of being supported on each frequency and a frequency priority of each frequency corresponding to each slice group. In addition, the frequency in the slice information includes a frequency of a cell on which the terminal device currently camps and a frequency of a neighboring cell. Optionally, the slice information may include but is not limited to the following optional implementations.

Implementation 4-1: The slice information includes the slice group that is capable of being supported on each frequency and the frequency priority of each frequency corresponding to each slice group, but a same frequency may have a plurality of frequency priorities corresponding to a same slice group in the slice information when different TAs cover a same frequency and are configured with duplicate slice group identifiers.

Optionally, when the frequency has a plurality of frequency priorities corresponding to the same slice group in the slice information, a frequency priority of the frequency corresponding to a first slice group is determined based on the plurality of frequency priorities. For example, the frequency priority of the frequency corresponding to the first slice group is an average value of a sum of the plurality of frequency priorities, or a highest frequency priority in the plurality of frequency priorities.

For example, after receiving the slice group configuration information shown in FIG. 2, the terminal device may further receive a slice-information list shown in Table 1-1. Slice groups supported on the frequency F1 are Slice-Group #1, Slice-Group #2, and Slice-Group #4; and frequency priorities of the frequency F1 corresponding to the three slice groups are Freq-F 1-priority 1, Freq-F 1-priority 2, and Freq-F 1-priority 3. Slice groups supported on the frequency F2 are Slice-Group #1, Slice-Group #2, and Slice-Group #3. In frequency priorities of the frequency F2 corresponding to the three slice groups, the frequency F2 has two frequency priorities, namely,: Freq-F2-priority 1 and Freq-F2-priority 2, corresponding to Slice-Group #1, a frequency priority of the frequency F2 corresponding to Slice-Group #2 is Freq-F2-priority 3, and a frequency priority of the frequency F2 corresponding to Slice-Group #3 is Freq-F2-priority 4. Slice groups supported on the frequency F3 are Slice-Group #1, Slice-Group #3, and Slice-Group #4, and frequency priorities of the frequency F3 corresponding to the three slice groups are Freq-F 1-priority 1, Freq-F1-priority 2, and Freq-F1-priority 3; and the like.

The frequency F2 has the two frequency priorities for Slice-Group #1: Freq-F2-priority 1 and Freq-F2-priority 2. In this case, a frequency priority of the frequency F2 corresponding to Slice-Group #1 is (Freq-F2-priority 1 + Freq-F2-priority 2)/2 or a higher frequency priority in Freq-F2-priority 1 and Freq-F2-priority 2. For example, if the higher frequency priority is Freq-F2-priority 1, the frequency priority of the frequency F2 corresponding to Slice-Group #1 is Freq-F2-priority 1.

**Table 1-1**

| Slice-information list (Slice-Info List) | | |
|---|---|---|
| Slice groups supported on the frequency F 1 (Supported-on-Freq-F 1) | Slice-Group #1 | Freq-F1-priority 1 |
| | Slice-Group #2 | Freq-F1-priority 2 |
| | Slice-Group #4 | Freq-F1-priority 3 |
| Slice groups supported on the frequency F2 (Supported-on-Freq-F2) | Slice-Group #1 | Freq-F2-priority 1, Freq-F2-priority 2 |
| | Slice-Group #2 | Freq-F2-priority 3 |
| | Slice-Group #3 | Freq-F2-priority 4 |
| Slice groups supported on the frequency F3 (Supported-on-Freq-F3) | Slice-Group #1 | Freq-F3-priority 1 |
| | Slice-Group #3 | Freq-F3-priority 2 |
| | Slice-Group #4 | Freq-F3-priority 3 |
| ... | ... | ... |

For another example, after receiving the slice group configuration information shown in FIG. 3, the terminal device may further receive a slice-information list shown in Table 1-2. Slice groups supported on the frequency F1 are Slice-Group #1 and Slice-Group #2. In frequency priorities of the frequency F1 corresponding to the two slice groups, the frequency F1 has two frequency priorities, namely, Freq-F1-priority 1 and Freq-F1-priority 2, corresponding to Slice-Group #1, and a frequency priority of the frequency F1 corresponding to Slice-Group #2 is Freq-F1-priority 3. Slice groups supported on the frequency F2 are Slice-Group #1, Slice-Group #2, and Slice-Group #3. In frequency priorities of the frequency F2 corresponding to the three slice groups, the frequency F2 has two frequency priorities, namely, Freq-F2-priority 1 and Freq-F2-priority 2, corresponding to Slice-Group #1, a frequency priority of the frequency F2 corresponding to Slice-Group #2 is Freq-F2-priority 3, and a frequency priority of the frequency F2 corresponding to Slice-Group #3 is Freq-F2-priority 4. Slice groups supported on the frequency F3 are Slice-Group #1 and Slice-Group #3. In frequency priorities of the frequency F3 corresponding to the three slice groups, the frequency F3 has two frequency priorities, namely, Freq-F3-priority 1 and Freq-F3-priority 2, corresponding to Slice-Group #1, and a frequency priority of the frequency F3 corresponding to Slice-Group #3 is Freq-F3-priority 3; and the like.

Similar to those in Table 1-1, the frequency F1 has the two frequency priorities, namely, Freq-F 1-priority 1 and Freq-F1-priority 2, corresponding to Slice-Group #1. In this case, a frequency priority of the frequency F1 corresponding to Slice-Group #1 is (Freq-F1-priority 1 + Freq-F 1-priority 2)/2 or a higher frequency priority in Freq-F1 -priority 1 and Freq-F 1 -priority 2. For example, if the higher frequency priority is Freq-F 1 -priority 1, the frequency priority of the frequency F1 corresponding to Slice-Group #1 is Freq-F1-priority 1. Similarly, the frequency F2 and the frequency F3 each have two frequency priorities corresponding to Slice-Group #1. Details are not described herein again.

**Table 1-2**

| Slice-information list (Slice-Info List) | | |
|---|---|---|
| Slice groups supported on the frequency F 1 (Supported-on-Freq-F 1) | Slice-Group #1 | Freq-F1-priority 1, Freq-F1-priority 2 |
| | Slice-Group #2 | Freq-F1-priority 3 |
| Slice groups supported on the frequency F2 (Supported-on-Freq-F2) | Slice-Group #1 | Freq-F2-priority 1, Freq-F2-priority 2 |
| | Slice-Group #2 | Freq-F2-priority 3 |
| | Slice-Group #3 | Freq-F2-priority 4 |
| Slice groups supported on the frequency F3 (Supported-on-Freq-F3) | Slice-Group #1 | Freq-F3-priority 1, Freq-F3-priority 2 |
| | Slice-Group #3 | Freq-F3-priority 3 |
| ... | ... | ... |

Implementation 4-2: The slice information includes the slice group that is capable of being supported on each frequency and the frequency priority of each frequency corresponding to each slice group, and the slice information further includes a TA of each slice group. In this way, a frequency priority of a same frequency corresponding to a same slice group is unique in a TA.

For example, after receiving the slice group configuration information shown in FIG. 2, the terminal device may further receive a slice-information list shown in Table 2-1. In comparison with the slice-information list shown in Table 1-1, the TA of each slice group is added to the slice-information list shown in Table 2-1. In this case, frequency priorities of the frequency F2 corresponding to Slice-Group #1 are Freq-F2-priority 1 in the TA 1 and Freq-F2-priority 2 in the TA 2. That is, the frequency priority of the same frequency corresponding to the same slice group is unique in the TA.

**Table 2-1**

| Slice-information list (Slice-Info List) | | | |
|---|---|---|---|
| Slice groups supported on the frequency F 1 (Supported-on-Freq-F 1) | Slice-Group #1 | TA 1 | Freq-F1-priority 1 |
| | Slice-Group #2 | TA 1 | Freq-F1-priority 2 |
| | Slice-Group #4 | TA 3 | Freq-F 1-priority 3 |
| Slice groups supported on the frequency F2 (Supported-on-Freq-F2) | Slice-Group #1 | TA 1 | Freq-F2-priority 1 |
| | | TA 2 | Freq-F2-priority 2 |
| | Slice-Group #2 | TA 1 | Freq-F2-priority 3 |
| | Slice-Group #3 | TA 2 | Freq-F2-priority 4 |
| Slice groups supported on the frequency F3 (Supported-on-Freq-F3) | Slice-Group #1 | TA 2 | Freq-F3-priority 1 |
| | Slice-Group #3 | TA 2 | Freq-F3-priority 2 |
| | Slice-Group #4 | TA 3 | Freq-F3-priority 3 |
| ... | ... | | ... |

For another example, after receiving the slice group configuration information shown in FIG. 3, the terminal device may further receive a slice-information list shown in Table 2-2. In comparison with the slice-information list shown in Table 1-2, the TA of each slice group is added to the slice-information list shown in Table 2-2. In this case, frequency priorities of the frequency F2 corresponding to Slice-Group #1 are Freq-F2-priority 1 in the TA 1 and Freq-F2-priority 2 in the TA 2. That is, the frequency priority of the same frequency corresponding to the same slice group is unique in the TA. Similarly, a frequency priority of each of the frequency F 1 and the frequency F3 corresponding to Slice-Group #1 is also unique. Details are not described herein again.

**Table 2-2**

| Slice-information list (Slice-Info List) | | | |
|---|---|---|---|
| Slice groups supported on the frequency F 1 (Supported-on-Freq-F 1) | Slice-Group #1 | TA 1 | Freq-F1-priority 1 |
| | | TA 3 | Freq-F 1-priority 2 |
| | Slice-Group #2 | TA 1 | Freq-F1-priority 3 |
| Slice groups supported on the frequency F2 (Supported-on-Freq-F2) | Slice-Group #1 | TA 1 | Freq-F2-priority 1 |
| | | TA 2 | Freq-F2-priority 2 |
| | Slice-Group #2 | TA 1 | Freq-F2-priority 3 |
| | Slice-Group #3 | TA 2 | Freq-F2-priority 4 |
| Slice groups supported on the frequency F3 (Supported-on-Freq-F3) | Slice-Group #1 | TA 2 | Freq-F3-priority 1 |
| | | TA 3 | Freq-F3-priority 2 |
| | Slice-Group #3 | TA 2 | Freq-F3-priority 3 |
| ... | ... | | ... |

Implementation 4-3: The slice information includes the slice group that is capable of being supported on each frequency and the frequency priority of each frequency corresponding to each slice group, and the slice information further includes a cell identifier (for example, a physical cell identifier (Physical Cell Identifier, PCI)) list that corresponds to each frequency and that is capable of supporting each slice group. Each frequency corresponds to different TAs and slice groups, and has different cell identifier lists.

For example, after receiving the slice group configuration information shown in FIG. 2, the terminal device may further receive a slice-information list shown in Table 3-1. In comparison with Table 2-1, in Table 3-1, all frequencies have corresponding frequency priorities and corresponding PCI lists (lists) in different TAs for supported slice groups.

**Table 3-1**

| Slice-information list (Slice-Info List) | | | | |
|---|---|---|---|---|
| Slice groups supported on the frequency F1 (Supported-on-Freq-F1) | Slice-Group #1 | TA 1 | Freq-F1-priority 1 | PCI list 1 |
| | Slice-Group #2 | TA 1 | Freq-F1-priority 2 | PCI list 2 |
| | Slice-Group #4 | TA 3 | Freq-F1-priority 3 | PCI list 3 |
| Slice groups supported on the frequency F2 (Supported-on-Freq-F2) | Slice-Group #1 | TA 1 | Freq-F2-priority 1 | PCI list 4 |
| | | TA 2 | Freq-F2-priority 2 | PCI list 5 |
| | Slice-Group #2 | TA 1 | Freq-F2-priority 3 | PCI list 6 |
| | Slice-Group #3 | TA 2 | Freq-F2-priority 4 | PCI list 7 |
| Slice groups supported on the frequency F3 (Supported-on- | Slice-Group #1 | TA 2 | Freq-F3-priority 1 | PCI list 8 |
| | Slice-Group #3 | TA 2 | Freq-F3-priority 2 | PCI list 9 |

| Freq-F3) | Slice-Group #4 | TA 3 | Freq-F3-priority 3 | PCI list 10 |
|---|---|---|---|---|
| ... | ... | | ... | |

For another example, after receiving the slice group configuration information shown in FIG. 3, the terminal device may further receive a slice-information list shown in Table 3-2. In comparison with Table 2-2, in Table 3-2, all frequencies have corresponding frequency priorities and corresponding PCI lists (lists) in different TAs for supported slice groups.

**Table 3-2**

| Slice-information list (Slice-Info List) | | | | |
|---|---|---|---|---|
| Slice groups supported on the frequency F1 (Supported-on-Freq-F1) | Slice-Group #1 | TA 1 | Freq-F1-priority 1 | PCI list 1 |
| | | TA 3 | Freq-F 1-priority 2 | PCI list 2 |
| | Slice-Group #2 | TA 1 | Freq-F1-priority 3 | PCI list 3 |
| Slice groups supported on the frequency F2 (Supported-on-Freq-F2) | Slice-Group #1 | TA 1 | Freq-F2-priority 1 | PCI list 5 |
| | | TA 2 | Freq-F2-priority 2 | PCI list 6 |
| | Slice-Group #2 | TA 1 | Freq-F2-priority 3 | PCI list 7 |
| | Slice-Group #3 | TA 2 | Freq-F2-priority 4 | PCI list 8 |
| Slice groups supported on the frequency F3 (Supported-on-Freq-F3) | Slice-Group #1 | TA 2 | Freq-F3-priority 1 | PCI list 9 |
| | | TA 3 | Freq-F3-priority 2 | PCI list 10 |
| | Slice-Group #3 | TA 2 | Freq-F3-priority 3 | PCI list 11 |
| ... | ... | | ... | |

Currently, cell reselection is a process in which the terminal device in an idle (IDLE) state or an inactive (INACTIVE) state monitors signal quality of a neighboring cell and signal quality of a current cell to select an optimal cell to provide a service signal. The neighboring cell includes an intra-frequency cell, an inter-frequency cell, an inter-RAT cell, or the like. Two parameters need to be considered for a measurement starting standard of cell reselection: a cell reselection priority of the neighboring cell and signal quality of a currently camped cell. To be specific, when a cell reselection priority of the neighboring cell is higher than that of the currently camped cell, regardless of signal quality of the currently camped cell, the terminal device needs to unconditionally start neighboring cell measurement, to perform the cell reselection process. Alternatively, when a cell reselection priority of the neighboring cell is lower than or equal to that of the currently camped cell, the terminal device needs to measure signal quality of the currently camped cell, and determine whether the signal quality of the currently camped cell is higher than a quality standard delivered by a network side. If the signal quality of the currently camped cell is higher than the quality standard delivered by a network side, the terminal device does not start neighboring cell measurement; or if the signal quality of the currently camped cell is not higher than the quality standard delivered by a network side, the terminal device starts neighboring cell measurement. After starting the neighboring cell measurement, the terminal device needs to determine, based on cell reselection conditions such as signal quality of a serving cell, signal quality of a neighboring cell, a reselection threshold delivered by a network side, and a cell access parameter, a target cell that can be camped on. The cell access parameter includes: whether a cell is barred (barred), whether a cell is reserved (reserved), an access class, and the like.

Therefore, how to perform cell reselection for the foregoing slice group configured at a TA granularity is an urgent problem to be resolved.

This application provides a cell reselection method. A terminal device may determine at least one first slice group and a first TA corresponding to each first slice group; the terminal device performs neighboring cell measurement based on a priority of each first TA and a frequency priority corresponding to each first slice group, to obtain a target cell that meets a cell reselection condition; and the terminal device may determine, based on a second TA, whether to camp on the target cell. It can be learned that, according to the cell reselection method, cell reselection can be performed based on a slice group configured at a TA granularity, so that information overheads that need to be carried in a broadcast system message are reduced in comparison with a network slice-based cell reselection method.

For ease of description, the first slice group corresponding to the frequency priority used for neighboring cell measurement through which the target cell is obtained is referred to as a second slice group, and a first TA of the second slice group is referred to as the second TA.

The following further describes embodiments of this application with reference to the accompanying drawings.

FIG. 4 is a schematic flowchart of a cell reselection method according to an embodiment of this application. As shown in FIG. 4, the cell reselection method includes but is not limited to the following steps.

S101: A terminal device determines at least one first slice group and a first tracking area TA of each first slice group.

As described above, the first slice group is a slice group including a network slice that the terminal device intends to access, and the first TA is a valid area of the corresponding first slice group.

A manner in which the terminal device determines the at least one first slice group and the first TA may include but is not limited to the following two implementations.

Implementation 101-1: The at least one first slice group and the first TA of each first slice group are determined by a NAS of the terminal device and forwarded to an access stratum (Access Stratum, AS) of the terminal device.

To be specific, the terminal device obtains the at least one first slice group and the first TA through derivation based on the intended slice and slice group configuration information via the NAS; and the terminal device forwards (the first TA: the first slice group) to the AS of the terminal device. Therefore, in this implementation, that the terminal device determines the at least one first slice group and the first TA of each first slice group includes: The terminal device receives the slice group configuration information from a core network via the NAS, where the slice group configuration information includes a slice group of each of a plurality of TAs and a network slice included in the slice group; the terminal device determines the at least one first slice group and the first TA of each first slice group from the plurality of TAs and the slice group of each TA based on the intended slice via the NAS; and the terminal device forwards the at least one first slice group and the first TA of each first slice group to the AS of the terminal device via the NAS.

For example, the slice group configuration information shown in FIG. 2 is used as an example, and it is assumed that the intended slice = S1. In this case, first slice groups and first TAs that are obtained by the terminal device through derivation via the NAS are as follows:
TA 1: Slice Group #1 = {S1, S4};
TA2: Slice Group #1 = {S1, S2}; and
TA3: Slice Group #4 = {S1}.

Further, the terminal device may forward the first slice groups and the first TAs to the AS of the terminal device via the NAS, to perform a cell reselection operation.

For another example, the slice group configuration information shown in FIG. 3 is used as an example, and it is assumed that the intended slice = S1. In this case, first slice groups and first TAs that are obtained by the terminal device through derivation via the NAS are as follows:
TA 1: Slice Group #1 = {S1, S4};
TA2: Slice Group #1 = {Sl}; and
TA3: Slice Group #1 = {S1, S4}.

Further, the terminal device may forward the first slice groups and the first TAs to the AS of the terminal device via the NAS, to perform a cell reselection operation.

Implementation 101-2: The at least one first slice group and the first TA of each first slice group are determined by an access stratum AS of the terminal device.

To be specific, a NAS of the terminal device forwards the intended slice and slice group configuration information to the AS of the terminal device, and the AS of the terminal device obtains the at least one first slice group and the first TA through derivation. That terminal device determines the at least one first slice group and the first TA of each first slice group includes: The terminal device receives, the slice group configuration information from a core network via the NAS, where the slice group configuration information includes a slice group of each of a plurality of TAs and a network slice included in the slice group; the terminal device forwards the intended slice and the slice group configuration information to the AS of the terminal device via the NAS; and the terminal device determines the at least one first slice group and the first TA of each first slice group from the plurality of TAs and the slice group of each TA based on the intended slice via the AS.

For example, the slice group configuration information shown in FIG. 2 and the intended slice S1 are first forwarded by the NAS of the terminal device to the AS of the terminal device, and then the AS of the terminal device obtains the foregoing first slice groups and first TAs through derivation. For another example, similarly, the slice group configuration information shown in FIG. 3 and the intended slice S1 are first forwarded by the NAS of the terminal device to the AS of the terminal device, and then the AS of the terminal device obtains the foregoing first slice groups and first TAs through derivation.

In this application, a manner in which the terminal device receives the slice group configuration information from the core network via the NAS may include but is not limited to the following two optional implementations.

In an optional implementation, before the terminal device receives the slice group configuration information from the core network via the NAS, an access network device receives slice group information from a network management device, where the slice group information indicates a network slice included in each slice group; the access network device binds a TA identifier (namely, a TAC) to each slice group to obtain the slice group configuration information; the access network device sends the slice group configuration information to the core network; and the core network device sends a non-access stratum NAS message to the terminal device, where the NAS message carries the intended slice and the slice group configuration information. It can be learned that, in this implementation, the access network device may bind the TAC to each slice group, and send the slice group configuration information to the core network through an interface between the access network device and the core network device, for example, an NG interface.

In another optional implementation, before the terminal device receives the slice group configuration information from the core network via the NAS, a network management device sends the slice group configuration information to the core network device; and the core network device sends a NAS message to the terminal device, where the NAS message carries the intended slice and the slice group configuration information.

S102: The terminal device performs neighboring cell measurement based on a priority of each first TA and a frequency priority corresponding to each first slice group, to obtain a target cell that meets a cell reselection condition.

The priority of each first TA may be determined based on a quantity of slices included in the first slice group of the first TA. For example, a larger quantity of slices included in the first slice group indicates a higher priority of the first TA of the first slice group. Alternatively, in at least one first TA, a priority of a TA on which the terminal device currently camps is highest, or the like. This is not limited in this application.

The frequency priority corresponding to each first slice group is obtained based on slice information from the access network. As described above, the slice information includes a slice group that is capable of being supported on each frequency and a frequency priority of each frequency corresponding to each slice group. Optionally, the slice information may include but is not limited to that in Implementation 4-1 to Implementation 4-3.

The slice information may be sent by the access network device to the terminal device in a broadcast or unicast manner. In the broadcast manner, the slice information may be carried by using a broadcast message. In the unicast manner, the slice information may be carried by using RRC dedicated signaling.

In step S102, the terminal device may determine a first TA with a highest priority based on the priority of each first TA; and perform neighboring cell measurement for the first TA with the highest priority based on a frequency priority corresponding to a first slice group of the first TA. If the target cell that meets the cell reselection condition is obtained, for example, the target cell whose signal quality meets a threshold delivered by a network side, the terminal device performs step S103; or if no target cell that meets the cell reselection condition is obtained, the terminal device determines a first TA with a second lowest priority, performs neighboring cell measurement for the first TA with the second lowest priority based on a frequency priority corresponding to a first slice group of the first TA, and the like. If the target cell that meets the cell reselection condition is not found in all first TAs, the terminal device continues to camp on a current cell.

S103: The terminal device determines, based on a second TA, whether to camp on the target cell.

In this application, the target cell that meets the cell reselection condition is obtained in step S102, and the terminal device further needs to determine, based on the second TA, whether to camp on the target cell. As described above, the second TA is a first TA of a second slice group, and the second slice group is a first slice group corresponding to the frequency priority used for neighboring cell measurement through which the target cell is obtained.

In an optional implementation, that the terminal device determines, based on the second TA, whether to camp on the target cell includes: When the second TA is the same as a TA identified by a TAC broadcast by the target cell, the terminal device determines to camp on the target cell; or when the second TA is different from a TA identified by a TAC broadcast by the target cell, the terminal device determines not to camp on the target cell.

In another optional implementation, when the slice information further includes a cell identifier list that corresponds to each frequency and that is capable of supporting each slice group, as shown in the slice-information list in Table 3-1 or Table 3-2, that the terminal device determines, based on the second TA, whether to camp on the target cell includes: when a cell identifier of the target cell is included in a first cell identifier list, the terminal device determines to camp on the target cell; or when a cell identifier of the target cell is not included in a first cell identifier list, the terminal device determines not to camp on the target cell, where the first cell identifier list is a cell identifier list that has a same frequency as the target cell and that is capable of supporting the second slice group.

In still another optional implementation, in the slice group configuration information in Implementation 3-2, there is a duplicate slice group identifier and a correspondence between the slice group identifier and a slice. That is, there is a same slice group identifier in different TAs, and the slice group identifier corresponds to a same slice. That the terminal device determines, based on the second TA, whether to camp on the target cell in step S 103 includes: When a TA identified by a TAC broadcast by the target cell is the second TA or an equivalent TA of the second TA, the terminal device determines to camp on the target cell; or when a TA identified by a TAC broadcast by the target cell is not the second TA or an equivalent TA of the second TA, the terminal device determines not to camp on the target cell. The equivalent TA of the second TA is the first TA of the first slice group that is the same as the second slice group. That is, there is a same slice group identifier and a same included network slice between the first slice group of the second TA (namely, the second slice group) and the first slice group of the equivalent TA of the second TA.

In yet another optional implementation, when the slice information further includes a cell identifier list that corresponds to each frequency and that is capable of supporting each slice group, that the terminal device determines, based on the second TA, whether to camp on the target cell includes: When a cell identifier of the target cell is included in a first cell identifier list, and the second TA is the same as a TA identified by a tracking area code TAC broadcast by the target cell, the terminal device determines to camp on the target cell; or when a cell identifier of the target cell is not included in a first cell identifier list, or the second TA is different from a TA identified by a tracking area code TAC broadcast by the target cell, the terminal device determines not to camp on the target cell, where the first cell identifier list is a cell identifier list that has a same frequency as the target cell and that is capable of supporting the second slice group. It can be learned that, in this implementation, whether the first slice group and the slice included in the first slice group are valid in the target cell may be determined from two aspects, namely, the cell identifier of the target cell and the TAC, and then whether to camp on the target cell is determined.

In still yet another optional implementation, when the slice information further includes a cell identifier list that corresponds to each frequency and that is capable of supporting each slice group, that the terminal device determines, based on the second TA, whether to camp on the target cell includes: When a cell identifier of the target cell is included in a first cell identifier list, and a TA identified by a TAC broadcast by the target cell is the second TA or an equivalent TA of the second TA, the terminal device determines to camp on the target cell; or when a cell identifier of the target cell is not included in a first cell identifier list, or a TA identified by a TAC broadcast by the target cell is not the second TA or an equivalent TA of the second TA, the terminal device determines not to camp on the target cell, where the first cell identifier list is a cell identifier list that has a same frequency as the target cell and that is capable of supporting the second slice group. It can be learned that, in this implementation, whether the first slice group and the slice included in the first slice group are valid in the target cell may be determined from two aspects, namely, the cell identifier of the target cell and the TAC, and then whether to camp on the target cell is determined.

It can be learned that, in this application, in a case in which the network side uses a duplicate slice group ID when configuring a slice group at a TA granularity, the terminal device can also obtain, based on the intended slice and the slice information broadcast or unicast by the access network device, a slice group ID and a frequency priority that are correspondingly supported by a specific TAC. Therefore, when performing cell reselection based on the foregoing frequency priority, the terminal device may determine, based on the TAC of the target cell, whether to camp on the target cell.

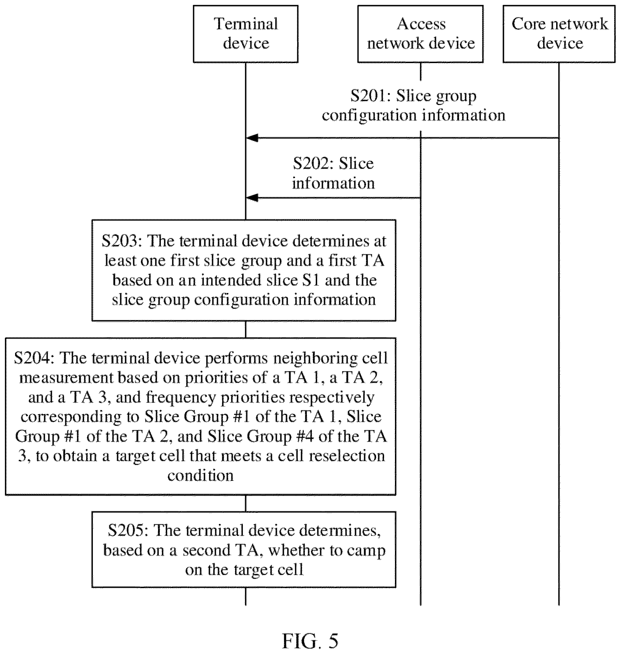

FIG. 5 is a diagram of another cell reselection method according to an embodiment of this application. The cell reselection method shown in FIG. 5 is described from a perspective of interaction between a terminal device, an access network device, and a core network device by using the slice group configuration information shown in FIG. 2 and the slice-information list shown in Table 1-1, Table 2-1, or Table 3-1 in the slice information in Implementation 4-1 to Implementation 4-3 as an example. As shown in FIG. 2, the terminal device currently camps on a cell in a TA 1. Optionally, the cell reselection method may include but is not limited to the following steps.

S201: The core network device sends slice group configuration information to the terminal device, and correspondingly, the terminal device receives the slice group configuration information.

The slice group configuration information is shown in FIG. 2 in Implementation 3-1.
(1) Frequencies covered by the TA 1 are F1 (Cell 1) and F2 (Cell 2), and a correspondence between a slice group ID and NSSAI is described as follows:
   Slice Group #1 = {S1, S4};
   Slice Group #2 = {S2, S3};
(2) frequencies covered by a TA 2 are F2 (Cell 3) and F3 (Cell 4), and a correspondence between a slice group ID and NSSAI is described as follows:
   Slice Group #1 = {S1, S2};
   Slice Group #3 = {S3, S4, S5}; and
(3) frequencies covered by a TA 3 are F1 (Cell 5) and F3 (Cell 6), and a correspondence between a slice group ID and NSSAI is described as follows:
   Slice Group #4 = {S1}.

S202: The access network device sends slice information to the terminal device, and correspondingly, the terminal device receives the slice information.

For example, for the slice group configuration information shown in FIG. 2, the terminal may receive the slice information in the slice-information list shown in Table 1-1, Table 2-1, or Table 3-1.

S203: The terminal device determines at least one first slice group and a first TA based on an intended slice = S1 and the slice group configuration information.

For example, the slice group configuration information shown in FIG. 2 is used as an example, and first slice groups and first TAs that are determined by the terminal device are as follows:
TA 1: Slice Group #1 = {S1, S4};
TA2: Slice Group #1 = {S1, S2}; and
TA3: Slice Group #4 = {S1}.

In the cell reselection method, the slice group configuration information shown in FIG. 2 is used as an example. If the TA 1 on which the terminal device currently camps has a highest priority, and the first slice group in the TA 2 includes more network slices than that in the TA, the TA 2 has a second lowest priority, and the TA 3 has a lowest priority.

S204: The terminal device performs neighboring cell measurement based on priorities of the TA 1, the TA 2, and the TA 3, and frequency priorities respectively corresponding to slice group #1 of the TA 1, slice group #1 of the TA 2, and slice group #4 of the TA 3, to obtain a target cell that meets a cell reselection condition.

A priority of each of the TA 1 to the TA 3 is determined based on the slice group configuration information, and the frequency priorities respectively corresponding to slice group #1 of the TA 1, slice group #1 of the TA 2, and slice group #4 of the TA 3 are determined based on the slice information. Optionally, before step S204, the terminal device may further determine, based on the received slice information, a frequency priority corresponding to each first slice group.

In this application, the frequency priority corresponding to the first slice group is a frequency priority of a frequency that corresponds to the first slice group and on which the first slice group is supported in the slice information.

S205: The terminal device determines, based on a second TA, whether to camp on the target cell.

Optionally, the second TA may be the TA 1, the TA 2, or the TA 3, and correspondingly, a second slice group may be slice group #1 or slice group #4. Frequency priorities corresponding to slice group #1 and slice group #4 are determined based on the slice information received in step S202.

In an optional implementation, the slice group configuration information shown in FIG. 2 in Implementation 3-1 and the slice-information list shown in Table 1-1 in the slice information in Implementation 4-1 are used as an example. The TA 1 on which the terminal device currently camps has a highest priority is assumed. Because the first slice group in the TA 2 includes more network slices than that in the TA 3, the TA 2 has a second lowest priority, and the TA 3 has a lowest priority. Step S204 and step S205 may include the following steps.

Step (1): The terminal device determines, for the TA 1 based on the slice information shown in Table 1-1, that a frequency priority of the frequency F1 corresponding to slice group #1 is Freq-F1-priority 1, a frequency priority of the frequency F2 corresponding to slice group #1 is (Freq-F2-priority 1 + Freq-F2-priority 2)/2, and a frequency priority of the frequency F3 corresponding to slice group #1 is Freq-F3-priority 1. In addition, both the frequency priority Freq-F 1-priority 1 and the frequency priority (Freq-F2-priority 1 + Freq-F2-priority 2)/2 are higher than a frequency priority of a cell on which the terminal device currently camps, but the frequency priority Freq-F3-priority 1 is lower than the frequency priority of the camped cell. In this case, the terminal device performs neighboring cell measurement based on the frequency F1 and the frequency F2. If the target cell that meets the cell reselection condition is obtained, when a TA identified by a TAC broadcast by the target cell is the TA 1, the terminal device camps on the target cell; or when a TA identified by a TAC broadcast by the target cell is not the TA 1, the terminal device determines that the target cell is barred or reserved and is excluded from a candidate target cell. Alternatively, if no target cell that meets the cell reselection condition is obtained, step (2) is performed.

Step (2): For the TA 2, because the slice information shown in Table 1-1 does not include TA information, and the first slice group of the TA 1 has a same slice group identifier as that of the TA2, the step in which the terminal device determines, from the slice information shown in Table 1-1, a frequency and a frequency priority that correspond to slice group #1 is the same as step (1). In this case, the terminal device performs neighboring cell measurement based on the frequency F1 and the frequency F2. If the target cell that meets the cell reselection condition is obtained, when a TA identified by a TAC broadcast by the target cell is the TA 2, the terminal device camps on the target cell; or when a TA identified by a TAC broadcast by the target cell is not the TA 2, the terminal device determines that the target cell is barred or reserved and is excluded from a candidate target cell. Alternatively, if no target cell that meets the cell reselection condition is obtained, step (3) continues to be performed.

Step (3): The terminal device determines, for the TA 3 based on the slice information shown in Table 1-1, that a frequency priority of the frequency F1 corresponding to slice group #4 is Freq-F 1-priority 3, and a frequency priority of the frequency F3 corresponding to slice group #4 is Freq-F3-priority 3. In addition, the frequency priority Freq-F 1-priority 3 is higher than the frequency priority of the currently camped cell, but the frequency priority Freq-F3-priority 3 is lower than the frequency priority of the currently camped cell. In this case, the terminal device performs neighboring cell measurement based on the frequency F1. If the target cell that meets the cell reselection condition is obtained, when a TA identified by a TAC broadcast by the target cell is the TA 3, the terminal device camps on the target cell; or when a TA identified by a TAC broadcast by the target cell is not the TA 3, the terminal device determines that the target cell is barred or reserved and is excluded from a candidate target cell. Alternatively, if no target cell that meets the cell reselection condition is obtained, the terminal device continues to camp on the current cell, and performs a cell reselection procedure again.

It can be learned that, in the cell reselection method, even if receiving slice information that is not bound to a TAC, the terminal can obtain a new frequency priority through derivation, to avoid misunderstanding. This reduces signaling overheads on an access network side when cell reselection is performed based on a slice group.

In another optional implementation, the slice-information list shown in Table 2-1 in the slice information in Implementation 4-2 is used as an example. If the TA 1 on which the terminal device currently camps has a highest priority, because the first slice group in the TA 2 includes more network slices than that in the TA 3, the TA 2 has a second lowest priority, and the TA 3 has a lowest priority. Step S204 and step S205 may include the following steps.

Step (1): The terminal device determines, for the TA 1 based on the slice information shown in Table 2-1, that a frequency priority of the frequency F1 corresponding to slice group #1 is Freq-F 1-priority 1, and a frequency priority of the frequency F2 corresponding to slice group #1 is Freq-F2-priority 1. In addition, both the frequency priority Freq-F 1-priority 1 and the frequency priority Freq-F2-priority 1 are higher than a frequency priority of a cell on which the terminal device currently camps. In this case, the terminal device performs neighboring cell measurement based on the frequency F1 and the frequency F2. If the target cell that meets the cell reselection condition is obtained, when a TA identified by a TAC broadcast by the target cell is the TA 1, the terminal device camps on the target cell; or when a TA identified by a TAC broadcast by the target cell is not the TA 1, the terminal device determines that the target cell is barred or reserved and is excluded from a candidate target cell. Alternatively, if no target cell that meets the cell reselection condition is obtained, step (2) is performed.

Step (2): Because the slice information shown in Table 2-1 includes TA information, the terminal device determines, for the TA 2 based on the slice information shown in Table 2-1, that a frequency priority of the frequency F2 corresponding to slice group #1 is Freq-F2-priority 2, and a frequency priority of the frequency F3 corresponding to slice group #1 is Freq-F3-priority 1. In addition, both the frequency priority Freq-F2-priority 2 and the frequency priority Freq-F3-priority 1 are higher than the frequency priority of the cell on which the terminal device currently camps. In this case, the terminal device performs neighboring cell measurement based on the frequency F2 and the frequency F3. If the target cell that meets the cell reselection condition is obtained, when a TA identified by a TAC broadcast by the target cell is the TA 2, the terminal device camps on the target cell; or when a TA identified by a TAC broadcast by the target cell is not the TA 2, the terminal device determines that the target cell is barred or reserved and is excluded from a candidate target cell. Alternatively, if no target cell that meets the cell reselection condition is obtained, step (3) continues to be performed.

Step (3): The terminal device determines, for the TA 3 based on the slice information shown in Table 2-1, that a frequency priority of the frequency F1 corresponding to slice group #4 is Freq-F 1-priority 3, and a frequency priority of the frequency F3 corresponding to slice group #4 is Freq-F3-priority 3. In addition, the frequency priority Freq-F 1-priority 3 is higher than the frequency priority of the currently camped cell, but the frequency priority Freq-F3-priority 3 is lower than the frequency priority of the currently camped cell. In this case, the terminal device performs neighboring cell measurement based on the frequency F1. If the target cell that meets the cell reselection condition is obtained, when a TA identified by a TAC broadcast by the target cell is the TA 3, the terminal device camps on the target cell; or when a TA identified by a TAC broadcast by the target cell is not the TA 3, the terminal device determines that the target cell is barred or reserved and is excluded from a candidate target cell. Alternatively, if no target cell that meets the cell reselection condition is obtained, the terminal device continues to camp on the current cell, and performs a cell reselection procedure again.

It can be learned that, in this implementation, when a frequency priority corresponding to the first slice group of the first TA is determined, because the slice information further includes the TA information, the frequency priority corresponding to the first slice group of the first TA is a frequency priority of a frequency that is covered by the first TA and that corresponds to the first slice group, or a frequency priority of a frequency corresponding to the first slice group of the first TA. For example, because there is no TA information in Table 1-1, frequency priorities corresponding to slice group #1 are the frequency priority Freq-F1-priority 1 of the frequency F1 corresponding to slice group #1, the frequency priority Freq-F2-priority 1 and the frequency priority Freq-F2-priority 2 of the frequency F2 corresponding to slice group #1, and the frequency priority Freq-F3-priority 1 of the frequency F3 corresponding to slice group #1. Because the TA information is included in Table 2-1, frequency priorities corresponding to slice group #1 of the TA 1 are the frequency priority Freq-F1-priority 1 of the frequency F1 corresponding to slice group #1 of the TA 1, and the frequency priority Freq-F2-priority 1 of the frequency F2 corresponding to slice group #1 of the TA 1. However, because a TA of slice group #1 supported on the frequency F3 is the TA 2, the frequency priority of the frequency F3 is not included.

In still another optional implementation, the slice-information list shown in Table 3-1 in the slice information in Implementation 4-3 is used as an example. If the TA 1 on which the terminal device currently camps has a highest priority, and the first slice group in the TA 2 includes more network slices than that in the TA 3, the TA 2 has a second lowest priority, and the TA 3 has a lowest priority. Step S204 and step S205 may include the following steps.

Step (1): The terminal device determines, for the TA 1 based on the slice information shown in Table 3-1, that a frequency priority of the frequency F1 corresponding to slice group #1 is Freq-F 1-priority 1, and a frequency priority of the frequency F2 corresponding to slice group #1 is Freq-F2-priority 1. In addition, both the frequency priority Freq-F 1-priority 1 and the frequency priority Freq-F2-priority 1 are higher than a frequency priority of a cell on which the terminal device currently camps. In this case, the terminal device performs neighboring cell measurement based on the frequency F1 and the frequency F2. If the target cell that meets the cell reselection condition is obtained, when a cell identifier of the target cell is included in the PCI list 1 or the PCI list 4 that supports slice group #1 of the TA 1, the terminal device camps on the target cell; or when a cell identifier of the target cell is not included in the PCI list 1 or the PCI list 4 that supports slice group #1 of the TA 1, the terminal device determines that the target cell is barred or reserved and is excluded from a candidate target cell. Alternatively, if no target cell that meets the cell reselection condition is obtained, step (2) is performed.

Step (2): Because the slice information shown in Table 3-1 includes TA information and PCI lists, the terminal device determines, for the TA 2 based on the slice information shown in Table 3-1, that a frequency priority of the frequency F2 corresponding to slice group #1 is Freq-F2-priority 2, and a frequency priority of the frequency F3 corresponding to slice group #1 is Freq-F3-priority 1. In addition, both the frequency priority Freq-F2-priority 2 and the frequency priority Freq-F3-priority 1 are higher than the frequency priority of the cell on which the terminal device currently camps. In this case, the terminal device performs neighboring cell measurement based on the frequency F2 and the frequency F3. If the target cell that meets the cell reselection condition is obtained, when a cell identifier of the target cell is included in the PCI list 5 or the PCI list 8 that supports slice group #1 of the TA 2, the terminal device camps on the target cell; or when a cell identifier of the target cell is not included in the PCI list 5 or the PCI list 8 that supports slice group #1 of the TA 2, the terminal device determines that the target cell is barred or reserved and is excluded from a candidate target cell. Alternatively, if no target cell that meets the cell reselection condition is obtained, step (3) continues to be performed.

Step (3): The terminal device determines, for the TA 3 based on the slice information shown in Table 3-1, that a frequency priority of the frequency F1 corresponding to slice group #4 is Freq-F 1-priority 3, and a frequency priority of the frequency F3 corresponding to slice group #4 is Freq-F3-priority 3. In addition, the frequency priority Freq-F 1-priority 3 is higher than the frequency priority of the currently camped cell, but the frequency priority Freq-F3-priority 3 is lower than the frequency priority of the currently camped cell. In this case, the terminal device performs neighboring cell measurement based on the frequency F1. If the target cell that meets the cell reselection condition is obtained, when a cell identifier of the target cell is included in the PCI list 3 that supports slice group #4 of the TA 3, the terminal device camps on the target cell; or when a cell identifier of the target cell is not included in the PCI list 3 that supports slice group #4 of the TA 3, the terminal device determines that the target cell is barred or reserved and is excluded from a candidate target cell. Alternatively, if no target cell that meets the cell reselection condition is obtained, the terminal device continues to camp on the current cell, and performs a cell reselection procedure again.

In yet another optional implementation, for the slice group configuration information shown in FIG. 2 and the slice-information list shown in Table 3-1, the terminal device may determine, from two aspects, namely, a cell identifier of the target cell and a TAC, whether the first slice group and a slice included in the first slice group are valid in the target cell, to determine whether to camp on the target cell. For details, refer to related content of the cell reselection method described in FIG. 4. Details are not described herein again.

It can be learned that, in this implementation, because the slice information includes the TA information and the PCI lists, the terminal device may determine, based on whether the cell identifier of the target cell is included in a PCI list that supports the second slice group of the second TA, whether to camp on the target cell. It can be learned that, in the cell reselection method shown in FIG. 5, in a case in which the network side uses a duplicate slice group ID when configuring a slice group at a TA granularity, the terminal device can obtain, based on the intended slice and the slice information broadcast or unicast by the access network device, a slice group ID and a frequency priority that are correspondingly supported by a specific TAC. Therefore, when performing cell reselection based on the foregoing frequency priority, the terminal device determines, based on a TAC in an SIB 1 of the target cell, whether to camp on the target cell.

An embodiment of this application provides still another cell reselection method. The cell reselection method is described by using the slice group configuration information shown in FIG. 3 and the slice-information list shown in Table 1-2, Table 2-2, or Table 3-2 in the slice information in Implementation 4-1 to Implementation 4-2 as an example. As shown in FIG. 3, a terminal device currently camps on a cell in a TA 1. Optionally, in the cell reselection method, the slice group configuration information received by the terminal device from a core network device is shown in FIG. 3 in Implementation 3-2.
(1) Frequencies covered by the TA 1 are F1 (Cell 1) and F2 (Cell 2), and a correspondence between a slice group ID and NSSAI is described as follows:
   Slice Group #1 = {S1, S4};
   Slice Group #2 = {S2, S3};
(2) frequencies covered by a TA 2 are F2 (Cell 3) and F3 (Cell 4), and a correspondence between a slice group ID and NSSAI is described as follows:
   Slice Group #1 = {S1};
   Slice Group #3 = {S3, S4, S5}; and
(3) frequencies covered by a TA 3 are F1 (Cell 5) and F3 (Cell 6), and a correspondence between a slice group ID and NSSAI is described as follows:
   Slice Group #1 = {S1, S4}.

In this case, the terminal device determines at least one first slice group and a first TA based on an intended slice S1 and the slice group configuration information shown in FIG. 3, that is,
TA 1: Slice Group #1 = {S1, S4};
TA2: Slice Group #1 = {Sl}; and
TA3: Slice Group #1 = {S1, S4}.

It is assumed that, in the cell reselection method, if the TA 1 on which the terminal device currently camps has a highest priority, and the first slice group in the TA 3 includes more network slices than that in the TA 2, the TA 3 has a second lowest priority, and the TA 2 has a lowest priority. In addition, Slice Group #1 in the TA 1 is the same as that in the TA 3, and a slice included in Slice Group #1 in the TA 1 is the same as that included in Slice Group #1 in the TA 3. Therefore, the TA 3 is an equivalent TA of the TA 1, and correspondingly, the TA 1 is also an equivalent TA of the TA 3.

The terminal device sequentially performs neighboring cell measurement in a priority sequence of the TA 1, the TA 3, and the TA 2 based on a frequency priority corresponding to Slice Group #1, to obtain a target cell, and then determines, based on a second TA, whether to camp on the target cell.

In an optional implementation, the slice-information list shown in Table 1-2 in the slice information in Implementation 4-1 is used as an example, and the terminal device performs neighboring cell measurement in the priority sequence of the TA 1, the TA 3, and the TA 2 based on a frequency priority corresponding to Slice Group #1 of each TA, to obtain the target cell, and then determines, based on the second TA, whether to camp on the target cell. Because there is no TA information in Table 1-2, frequencies that support slice group #1 in the slice-information list shown in Table 1-2 are F1, F2, and F3, and the frequency F1 has two frequency priorities, namely, Freq-F1-priority 1 and Freq-F1-priority 2, corresponding to slice group #1. Optionally, an example in which a frequency priority of the frequency F1 corresponding to slice group #1 is (Freq-F1-priority 1 + Freq-F1-priority 2)/2 is used. Similarly, the frequency F2 has two frequency priorities, namely, Freq-F2-priority 1 and Freq-F2-priority 2, corresponding to slice group #1. Optionally, an example in which a frequency priority of the frequency F2 corresponding to slice group #1 is (Freq-F2-priority 1 + Freq-F2-priority 2)/2 is used. Similarly, the frequency F3 has two frequency priorities, namely, Freq-F3-priority 1 and Freq-F3-priority 2, corresponding to slice group #1. Optionally, an example in which a frequency priority of the frequency F3 corresponding to slice group #1 is (Freq-F3-priority 1 + Freq-F3-priority 2)/2 is used.

In this implementation, that the terminal device performs neighboring cell measurement in the priority sequence of the TA 1, the TA 3, and the TA 2 based on the frequency priority corresponding to slice group #1 of each TA, to obtain the target cell, and then determines, based on the second TA, whether to camp on the target cell may include the following steps.

Step (1): The terminal device determines, for the TA 1 based on the slice information shown in Table 1-2, that a frequency priority of the frequency F1 corresponding to slice group #1 is (Freq-F1-priority 1 + Freq-F1-priority 2)/2, a frequency priority of the frequency F2 corresponding to slice group #1 is (Freq-F2-priority 1 + Freq-F2-priority 2)/2, and a frequency priority of the frequency F3 corresponding to slice group #1 is (Freq-F3-priority 1 + Freq-F3-priority 2)/2. In addition, both the frequency priority (Freq-F1-priority 1 + Freq-F1-priority 2)/2 and the frequency priority (Freq-F2-priority 1 + Freq-F2-priority 2)/2 are higher than a frequency priority of a cell on which the terminal device currently camps, but the frequency priority (Freq-F3-priority 1 + Freq-F3-priority 2)/2 is lower than the frequency priority of the camped cell. In this case, the terminal device performs neighboring cell measurement based on the frequency F1 and the frequency F2. If the target cell that meets the cell reselection condition is obtained, when a TA identified by a TAC broadcast by the target cell is the TA 1 or the TA 3, the terminal device camps on the target cell; or when a TA identified by a TAC broadcast by the target cell is not the TA 1 or the TA 3, the terminal device determines that the target cell is barred or reserved and is excluded from a candidate target cell. Alternatively, if no target cell that meets the cell reselection condition is obtained, step (3) is performed.

Step (2): Because the slice information shown in Table 1-2 does not include TA information, and the first slice group of the TA 1 has a same slice group identifier as that of the TA 2, a frequency that supports slice group #1 and a frequency priority corresponding to slice group #1 that are determined by the terminal device for the TA 2 from the slice information shown in Table 1-2 are the same as those determined for the TA 1. In this case, the terminal device performs neighboring cell measurement based on the frequency F1 and the frequency F2. If the target cell that meets the cell reselection condition is obtained, when a TA identified by a TAC broadcast by the target cell is the TA 2, the terminal device camps on the target cell; or when a TA identified by a TAC broadcast by the target cell is not the TA 2, the terminal device determines that the target cell is barred or reserved and is excluded from a candidate target cell. Alternatively, if no target cell that meets the cell reselection condition is obtained, the terminal device continues to camp on the current cell, and performs a cell reselection procedure again.

Step (3): Because the first slice group of the TA 3 has a same slice group identifier as that of the TA 1, a frequency that supports slice group #1 and a corresponding frequency priority that are determined by the terminal device for the TA 3 from the slice information shown in Table 1-2 are the same as those determined for the TA 1. In this case, the terminal device performs neighboring cell measurement based on the frequency F1 and the frequency F2. If the target cell that meets the cell reselection condition is obtained, when a TA identified by a TAC broadcast by the target cell is the TA 3 or the TA 1, the terminal device camps on the target cell; or when a TA identified by a TAC broadcast by the target cell is not the TA 3 or the TA 1, the terminal device determines that the target cell is barred or reserved and is excluded from a candidate target cell. Alternatively, if no target cell that meets the cell reselection condition is obtained, step (2) is performed.

In the cell reselection method, even if receiving slice information that is not bound to a TAC, the terminal can obtain a new frequency priority through derivation, to avoid misunderstanding. In comparison with a slice-based cell reselection method, according to the cell reselection method in this application, signaling overheads on an access network side are reduced when cell reselection is performed based on a slice group.

In another optional implementation, the slice-information list shown in Table 2-2 in the slice information in Implementation 4-2 is used as an example, and the slice information shown in Table 2-2 includes TA information. In this case, in the slice-information list shown in Table 2-2, frequencies on which slice group #1 of the TA 1 is supported are F1 and F2, where a frequency priority of the frequency F1 corresponding to slice group #1 of the TA 1 is Freq-F 1-priority 1, and a frequency priority of the frequency F2 corresponding to slice group #1 of the TA 1 is Freq-F2-priority 1; frequencies on which slice group #1 of the TA 2 is supported are F2 and F3, where a frequency priority of the frequency F2 corresponding to slice group #1 of the TA 2 is Freq-F2-priority 2, and a frequency priority of the frequency F3 corresponding to slice group #1 of the TA 2 is Freq-F3-priority 1; and frequencies on which slice group #1 of the TA 3 is supported are F1 and F3, where a frequency priority of the frequency F1 corresponding to slice group #1 of the TA 3 is Freq-F1-priority 2, and a frequency priority of the frequency F3 corresponding to slice group #1 of the TA 3 is Freq-F3-priority 2. That the terminal device performs neighboring cell measurement in the priority sequence of the TA 1, the TA 3, and the TA 2 based on the frequency priority corresponding to slice group #1 of each TA, to obtain the target cell, and then determines, based on the second TA, whether to camp on the target cell may include the following steps.

Step (1): The terminal device determines, for the TA 1 based on the slice information shown in Table 2-2, that a frequency priority of the frequency F1 corresponding to slice group #1 of the TA 1 is Freq-F1-priority 1, and a frequency priority of the frequency F2 corresponding to slice group #1 of the TA 1 is Freq-F2-priority 1. In addition, both the frequency priority Freq-F 1-priority 1 and the frequency priority Freq-F2-priority 1 are higher than a frequency priority of a currently camped cell. In this case, the terminal device performs neighboring cell measurement based on the frequency F1 and the frequency F2. If the target cell that meets the cell reselection condition is obtained, when a TA identified by a TAC broadcast by the target cell is the TA 1 or the TA 3, the terminal device camps on the target cell; or when a TA identified by a TAC broadcast by the target cell is not the TA 1 or the TA 3, the terminal device determines that the target cell is barred or reserved and is excluded from a candidate target cell. Alternatively, if no target cell that meets the cell reselection condition is obtained, step (3) is performed.

Step (2): The terminal device determines, for the TA 2 based on the slice information shown in Table 2-2, that a frequency priority of the frequency F2 corresponding to slice group #1 of the TA 2 is Freq-F2-priority 2, and a frequency priority of the frequency F3 corresponding to slice group #1 of the TA 2 is Freq-F3-priority 1. In addition, both the frequency priority Freq-F2-priority 2 and the frequency priority Freq-F3-priority 1 are higher than the frequency priority of the currently camped cell. In this case, the terminal device performs neighboring cell measurement based on the frequency F2 and the frequency F3. If no target cell that meets the cell reselection condition is obtained, the terminal device continues to camp on the current cell, and performs a cell reselection procedure again. Alternatively, if the target cell that meets the cell reselection condition is obtained, when a TA identified by a TAC broadcast by the target cell is the TA 2, the terminal device camps on the target cell; or when a TA identified by a TAC broadcast by the target cell is not the TA 2, the terminal device determines that the target cell is barred or reserved and is excluded from a candidate target cell.

Step (3): The terminal device determines, for the TA 3 based on the slice information shown in Table 2-2, that a frequency priority of the frequency F1 corresponding to slice group #1 of the TA3 is Freq-F 1-priority 2, and a frequency priority of the frequency F3 corresponding to slice group #1 of the TA 3 is Freq-F3-priority 2. In addition, both the frequency priority Freq-F1-priority 2 and the frequency priority Freq-F3-priority 2 are higher than the frequency priority of the currently camped cell. In this case, the terminal device performs neighboring cell measurement based on the frequency F1 and the frequency F3. If no target cell that meets the cell reselection condition is obtained, step (2) is performed. Alternatively, if the target cell that meets the cell reselection condition is obtained, when a TA identified by a TAC broadcast by the target cell is the TA 3 or the TA 1, the terminal device camps on the target cell; or when a TA identified by a TAC broadcast by the target cell is not the TA 3 or the TA 1, the terminal device determines that the target cell is barred or reserved and is excluded from a candidate target cell.

In still another optional implementation, the slice-information list shown in Table 3-2 in the slice information in Implementation 4-3 is used as an example. The slice information shown in Table 3-2 includes TA information, and includes, compared with Table 2-2, a cell identifier list that corresponds to each frequency and that is capable of supporting each slice group. The frequencies on which slice group #1 of the TA 1 to slice group #1 of the TA 3 are respectively supported and corresponding frequency priorities that are determined by the terminal device based on the slice-information list shown in Table 3-2 are the same as those determined based on the slice-information list shown in Table 2-2. Details are not described herein again. A difference between this implementation and the foregoing implementation lies in that, after the target cell is obtained, whether the terminal device camps on the target cell may be determined based on whether a cell identifier of the target cell is included in a PCI list that supports slice group #1 of a corresponding TA. This implementation is similar to the implementation corresponding to the slice group configuration information shown in FIG. 2 and the slice information shown in Table 3-1. Details are not described herein again.

In yet another optional implementation, for the slice group configuration information shown in FIG. 3 and the slice-information list shown in Table 3-2, the terminal device may determine, from two aspects, namely, a cell identifier of the target cell and a TAC, whether the first slice group and a slice included in the first slice group are valid in the target cell, to determine whether to camp on the target cell. For details, refer to related content of the cell reselection method described in FIG. 4. Details are not described herein again.

It can be learned that, in the cell reselection method, the network side may use a duplicate slice group ID and a duplicate correspondence when configuring a slice group at a TA granularity, and the terminal can still obtain a frequency priority through derivation based on slice information, to avoid misunderstanding. It can be learned that, in comparison with a method for performing cell reselection based on a slice, in this application, when cell reselection is performed based on a slice group, the access network side does not need to send slice information to the terminal device for each slice, so that signaling overheads on the access network side are reduced.

In the foregoing embodiments, descriptions of embodiments have respective focuses. To avoid redundancy, for a part that is not described in detail in an embodiment, refer to related descriptions in other embodiments. In addition, a combination layout of various implementations of the slice group configuration information, various implementations of the slice information, and optional implementations of other content includes but is not limited to the descriptions in the foregoing embodiments.

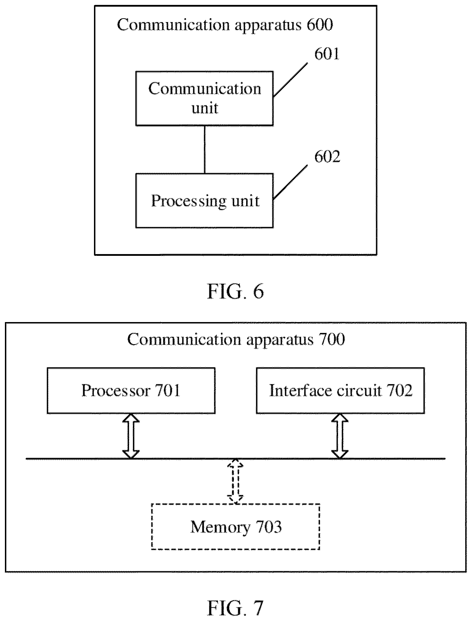

To implement functions in any one of the cell reselection methods provided in embodiments of this application, the network device and the terminal device may separately include a hardware structure and/or a software module, and implement the foregoing functions in a form of the hardware structure, the software module, or a combination of the hardware structure and the software module. One of the foregoing functions may be performed by using the hardware structure, the software module, or the combination of the hardware structure and the software module. FIG. 6 and FIG. 7 each are a diagram of a structure of a possible communication apparatus according to an embodiment of this application. The communication apparatuses may be configured to implement functions of the terminal device or the network device in the foregoing method embodiments. Therefore, beneficial effect of the foregoing method embodiments can also be implemented.

A communication apparatus 600 shown in FIG. 6 may include a communication unit 601 and a processing unit 602. The communication unit 601 may include a sending unit and a receiving unit. The sending unit is configured to implement a sending function, and the receiving unit is configured to implement a receiving function. The communication unit 601 may implement the sending function and/or the receiving function. The communication unit may also be described as a transceiver unit.

The communication apparatus 600 may be a terminal device, may be an apparatus in the terminal device, or may be an apparatus having functions of the terminal device.

In an implementation, the communication apparatus 600 may perform related operations of the terminal device in the foregoing cell reselection method. The processing unit 602 is configured to determine at least one first slice group and a first tracking area TA of each first slice group, where the first slice group is a slice group including a network slice that the terminal device intends to access. The processing unit 602 is further configured to perform neighboring cell measurement based on a priority of each first TA and a frequency priority corresponding to each first slice group, to obtain a target cell that meets a cell reselection condition. The processing unit 602 is further configured to determine, based on a second TA, whether to camp on the target cell, where the second TA is a first TA of a second slice group, and the second slice group is a first slice group corresponding to the frequency priority used for neighboring cell measurement through which the target cell is obtained.

In addition, the communication unit 601 may be configured to receive the slice group configuration information and the slice information in the foregoing method embodiments.

For more detailed descriptions of the processing unit 602 and the communication unit 601, refer to the related descriptions in the foregoing method embodiments.

The communication apparatus 600 may be an access network device, may be an apparatus in the access network device, or may be an apparatus having functions of the access network device.

In an implementation, the communication apparatus 600 may perform related operations of the access network device in the foregoing cell reselection method. The processing unit 602 is configured to determine slice information, where the slice information includes a slice group that is capable of being supported on each frequency, a frequency priority of each frequency corresponding to each slice group, and a tracking area TA of each slice group. The communication unit 601 is configured to send the slice information to a terminal device, where the slice information is used to assist the terminal device in performing cell reselection for a network slice. In an optional implementation, the slice information further includes a cell identifier list that corresponds to each frequency and that is capable of supporting each slice group.

In another implementation, the communication unit 601 may receive slice group information from a network management device, where the slice group information indicates a network slice included in each slice group. The processing unit 602 binds a TA identifier to each slice group to obtain slice group configuration information, where the slice group configuration information includes a slice group of each TA and a network slice included in the slice group. The communication unit 601 sends the slice group configuration information to a core network, where the slice group configuration information is used to assist the terminal device in performing cell reselection based on the slice information and a network slice that the terminal device intends to access.

For more detailed descriptions of the processing unit 602 and the communication unit 601, refer to the related descriptions in the foregoing method embodiments.

The communication apparatus 600 may be a core network device, may be an apparatus in the core network device, or may be an apparatus having functions of the core network device.

In an implementation, the communication apparatus 600 may perform related operations of the core network device in the foregoing cell reselection method. The communication unit 601 is configured to receive slice group configuration information from a network management device or an access network device, where the slice group configuration information includes a slice group of each TA and a network slice included in the slice group. The communication unit 601 is further configured to send a non-access stratum NAS message to a terminal device, where the NAS message carries the slice group configuration information, and the slice group configuration information is used to assist the terminal device in performing cell reselection based on a network slice that is intended to be accessed.

For related content of the implementation, refer to related content of the foregoing method embodiments. In addition, the communication apparatus 600 may further perform related operations in other embodiments.

A communication apparatus 700 shown in FIG. 7 may include a processor 701 and an interface circuit 702. The processor 701 and the interface circuit 702 are coupled to each other. It may be understood that the interface circuit 702 may be an interface circuit or an input/output interface. Optionally, the communication apparatus 700 may further include a memory 703, configured to: store instructions executed by the processor 701, or store input data required for running instructions by the processor 701, or store data generated after the processor 701 runs instructions.

When the communication apparatus 700 is a terminal device, the processor 701 performs S101 to S103 in FIG. 4, or the processor 701 performs S203 to S205 in FIG. 5, and the interface circuit 702 is configured to perform S201 and S202 in FIG. 5.

When the communication apparatus 700 is a network device like an access network device or a core network device, the interface circuit 702 is configured to perform S201 and S202 in FIG. 5.

When the communication apparatus is a chip used in a terminal device, the chip in the terminal device implements the functions of the terminal device in the foregoing method embodiments. The chip in the terminal device receives information from another module (for example, a radio frequency module or an antenna) in the terminal device, where the information is sent by a network device to the terminal device. Alternatively, the chip in the terminal device sends information to another module (for example, a radio frequency module or an antenna) in the terminal device, where the information is sent by the terminal device to a network device.

When the communication apparatus is a module used in a network device, the module in the network device implements the functions of the network device in the foregoing method embodiments. The module in the network device receives information from another module (for example, a radio frequency module or an antenna) in the network device, where the information is sent by a terminal device to the network device. Alternatively, the module in the network device sends information to another module (for example, a radio frequency module or an antenna) in the network device, where the information is sent by the network device to a terminal device. The module in the network device herein may be a baseband chip of the network device, or may be a DU or another module. The DU herein may be a DU in an open radio access network (open radio access network, O-RAN) architecture.

It may be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field-programmable gate array (Field-Programmable Gate Array, FPGA) or another programmable logic device, a transistor logic device, a hardware component, or any combination thereof. The general-purpose processor may be a microprocessor or any regular processor.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or a storage medium of any other form well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a network device or a terminal device. Certainly, the processor and the storage medium may alternatively exist as discrete components in a network device or a terminal device.

All or some of the foregoing embodiments may be implemented by using software, hardware, firmware, or any combination thereof. When software is used to implement embodiments, all or some of embodiments may be implemented in a form of a computer program product. The computer program product includes one or more computer programs or instructions. When the computer programs or the instructions are loaded and executed on a computer, all or some of procedures or functions in embodiments of this application are executed. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

## Claims

1. A cell reselection method, wherein the method comprises:
determining, by a terminal device, at least one first slice group and a first tracking area TA of each first slice group, wherein the first slice group is a slice group comprising a network slice that the terminal device intends to access;
performing, by the terminal device, neighboring cell measurement based on a priority of each first TA and a frequency priority corresponding to each first slice group, to obtain a target cell that meets a cell reselection condition; and
determining, by the terminal device based on a second TA, whether to camp on the target cell, wherein the second TA is a first TA of a second slice group, and the second slice group is a first slice group corresponding to the frequency priority used for neighboring cell measurement through which the target cell is obtained.

2. The method according to claim 1, wherein
the at least one first slice group and the first TA of each first slice group are determined by a non-access stratum NAS of the terminal device and forwarded to an access stratum AS of the terminal device.

3. The method according to claim 2, wherein the determining, by a terminal device, at least one first slice group and a first TA of each first slice group comprises:
receiving, by the terminal device, slice group configuration information from a core network via the NAS, wherein the slice group configuration information comprises a slice group of each of a plurality of TAs and a network slice comprised in the slice group;
determining, by the terminal device via the NAS, the at least one first slice group and the first TA of each first slice group from the plurality of TAs and the slice group of each TA based on the network slice that the terminal device intends to access; and
forwarding, by the terminal device, the at least one first slice group and the first TA of each first slice group to the AS of the terminal device via the NAS.

4. The method according to claim 1, wherein
the at least one first slice group and the first TA of each first slice group are determined by an access stratum AS of the terminal device.

5. The method according to claim 4, wherein the determining, by a terminal device, at least one first slice group and a first TA of each first slice group comprises:
receiving, by the terminal device, slice group configuration information from a core network via a non-access stratum NAS, wherein the slice group configuration information comprises a slice group of each of a plurality of TAs and a network slice comprised in the slice group;
forwarding, by the terminal device to the AS of the terminal device via the NAS, the network slice that the terminal device intends to access and the slice group configuration information; and
determining, by the terminal device via the AS, the at least one first slice group and the first TA of each first slice group from the plurality of TAs and the slice group of each TA based on the network slice that the terminal device intends to access.

6. The method according to any one of claims 1 to 5, wherein the frequency priority corresponding to each first slice group is obtained based on slice information from an access network; and
the slice information comprises a slice group that is capable of being supported on each frequency and a frequency priority of each frequency corresponding to each slice group.

7. The method according to claim 6, wherein when the frequency has a plurality of frequency priorities corresponding to a same slice group in the slice information, a frequency priority of the frequency corresponding to the first slice group is determined based on the plurality of frequency priorities.

8. The method according to claim 6, wherein the slice information further comprises a TA of each slice group.

9. The method according to claim 8, wherein when the slice information further comprises a cell identifier list that corresponds to each frequency and that is capable of supporting each slice group, the determining, by the terminal device based on a second TA, whether to camp on the target cell comprises:
when a cell identifier of the target cell is comprised in a first cell identifier list, determining, by the terminal device, to camp on the target cell; or
when a cell identifier of the target cell is not comprised in a first cell identifier list, determining, by the terminal device, not to camp on the target cell, wherein
the first cell identifier list is a cell identifier list that supports the second slice group of the second TA.

10. The method according to any one of claims 6 to 9, wherein the determining, by the terminal device based on a second TA, whether to camp on the target cell comprises:
when the second TA is the same as a TA identified by a tracking area code TAC broadcast by the target cell, determining, by the terminal device, to camp on the target cell; or
when the second TA is different from a TA identified by a tracking area code TAC broadcast by the target cell, determining, by the terminal device, not to camp on the target cell.

11. The method according to any one of claims 6 to 9, wherein the determining, by the terminal device based on a second TA, whether to camp on the target cell comprises:
when a TA identified by a tracking area code TAC broadcast by the target cell is the second TA or an equivalent TA of the second TA, determining, by the terminal device, to camp on the target cell; or
when a TA identified by a tracking area code TAC broadcast by the target cell is not the second TA or an equivalent TA of the second TA, determining, by the terminal device, not to camp on the target cell, wherein
the equivalent TA of the second TA is the first TA of the first slice group that is the same as the second slice group.

12. A cell reselection method, wherein the method comprises:
determining, by an access network device, slice information, wherein the slice information comprises a slice group that is capable of being supported on each frequency, a frequency priority of each frequency corresponding to each slice group, and a tracking area TA of each slice group; and
sending, by the access network device, the slice information to a terminal device, wherein the slice information is used to assist the terminal device in performing cell reselection for a network slice.

13. The method according to claim 12, wherein the slice information further comprises a cell identifier list that corresponds to each frequency and that is capable of supporting each slice group.

14. The method according to claim 12 or 13, wherein the method further comprises:
receiving, by the access network device, slice group information from a network management device, wherein the slice group information indicates a network slice comprised in each slice group;
binding, by the access network device, a TA identifier to each slice group to obtain slice group configuration information, wherein the slice group configuration information comprises a slice group of each TA and a network slice comprised in the slice group; and
sending, by the access network device, the slice group configuration information to a core network, wherein
the slice group configuration information is used to assist the terminal device in performing cell reselection based on the slice information and a network slice that the terminal device intends to access.

15. A cell reselection method, wherein the method comprises:
receiving, by a core network device, slice group configuration information from a network management device or an access network device, wherein the slice group configuration information comprises a slice group of each TA and a network slice comprised in the slice group; and
sending, by the core network device, a non-access stratum NAS message to a terminal device, wherein the NAS message carries the slice group configuration information, wherein
the slice group configuration information is used to assist the terminal device in performing cell reselection based on a network slice that is intended to be accessed.

16. A cell reselection apparatus, wherein the apparatus comprises:
a processing unit, configured to determine at least one first slice group and a first tracking area TA of each first slice group, wherein the first slice group is a slice group comprising a network slice that a terminal device intends to access, wherein
the processing unit is further configured to perform neighboring cell measurement based on a priority of each first TA and a frequency priority corresponding to each first slice group, to obtain a target cell that meets a cell reselection condition; and
the processing unit is further configured to determine, based on a second TA, whether to camp on the target cell, wherein the second TA is a first TA of a second slice group, and the second slice group is a first slice group corresponding to the frequency priority used for neighboring cell measurement through which the target cell is obtained.

17. The apparatus according to claim 16, wherein
the at least one first slice group and the first TA of each first slice group are determined by a non-access stratum NAS of the terminal device and forwarded to an access stratum AS of the terminal device.

18. The apparatus according to claim 17, wherein that the processing unit determines the at least one first slice group and the first TA of each first slice group is specifically:
receiving slice group configuration information from a core network via the NAS, wherein the slice group configuration information comprises a slice group of each of a plurality of TAs and a network slice comprised in the slice group;
determining, via the NAS, the at least one first slice group and the first TA of each first slice group from the plurality of TAs and the slice group of each TA based on the network slice that the terminal device intends to access; and
forwarding the at least one first slice group and the first TA of each first slice group to the AS of the terminal device via the NAS.

19. The apparatus according to claim 16, wherein
the at least one first slice group and the first TA of each first slice group are determined by an access stratum AS of the terminal device.

20. The apparatus according to claim 19, wherein that the processing unit determines the at least one first slice group and the first TA of each first slice group is specifically:
receiving slice group configuration information from a core network via a non-access stratum NAS, wherein the slice group configuration information comprises a slice group of each of a plurality of TAs and a network slice comprised in the slice group;
forwarding, to the AS of the terminal device via the NAS, the network slice that the terminal device intends to access and the slice group configuration information; and
determining, via the AS, the at least one first slice group and the first TA of each first slice group from the plurality of TAs and the slice group of each TA based on the network slice that the terminal device intends to access.

21. The apparatus according to any one of claims 16 to 20, wherein the frequency priority corresponding to each first slice group is obtained based on slice information from an access network; and
the slice information comprises a slice group that is capable of being supported on each frequency and a frequency priority of each frequency corresponding to each slice group.

22. The apparatus according to claim 21, wherein when the frequency has a plurality of frequency priorities corresponding to a same slice group in the slice information, a frequency priority of the frequency corresponding to the first slice group is based on the plurality of frequency priorities.

23. The apparatus according to claim 21, wherein the slice information further comprises a TA of each slice group.

24. The apparatus according to claim 23, wherein when the slice information further comprises a cell identifier list that corresponds to each frequency and that is capable of supporting each slice group, that the processing unit determines, based on the second TA, whether to camp on the target cell is specifically:
when a cell identifier of the target cell is comprised in a first cell identifier list, determining to camp on the target cell; or
when a cell identifier of the target cell is not comprised in a first cell identifier list, determining not to camp on the target cell, wherein
the first cell identifier list is a cell identifier list that supports the second slice group of the second TA.

25. The apparatus according to any one of claims 21 to 24, wherein that the processing unit determines, based on the second TA, whether to camp on the target cell is specifically:
when the second TA is the same as a TA identified by a tracking area code TAC broadcast by the target cell, determining to camp on the target cell; or
when the second TA is different from a TA identified by a tracking area code TAC broadcast by the target cell, determining not to camp on the target cell.

26. The apparatus according to any one of claims 21 to 24, wherein that the processing unit determines, based on the second TA, whether to camp on the target cell is specifically:
when a TA identified by a tracking area code TAC broadcast by the target cell is the second TA or an equivalent TA of the second TA, determining to camp on the target cell; or
when a TA identified by a tracking area code TAC broadcast by the target cell is not the second TA or an equivalent TA of the second TA, determining not to camp on the target cell, wherein
the equivalent TA of the second TA is the first TA of the first slice group that is the same as the second slice group.

27. A cell reselection apparatus, wherein the apparatus comprises:
a processing unit, configured to determine slice information, wherein the slice information comprises a slice group that is capable of being supported on each frequency, a frequency priority of each frequency corresponding to each slice group, and a tracking area TA of each slice group; and
a communication unit, configured to send the slice information to a terminal device, wherein the slice information is used to assist the terminal device in performing cell reselection for a network slice.

28. A cell reselection apparatus, wherein the apparatus comprises:
a communication unit, configured to receive slice group configuration information from a network management device or an access network device, wherein the slice group configuration information comprises a slice group of each TA and a network slice comprised in the slice group, wherein
the communication unit is further configured to send a non-access stratum NAS message to a terminal device, wherein the NAS message carries the slice group configuration information; and
the slice group configuration information is used to assist the terminal device in performing cell reselection based on a network slice that is intended to be accessed.

29. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to implement the method according to any one of claims 1 to 11, the method according to any one of claims 12 to 14, or the method according to claim 15 by using a logic circuit or by executing code instructions.

30. A computer-readable storage medium, wherein the storage medium stores a computer program or instructions, and when the computer program or the instructions is/are executed by a communication apparatus, the method according to any one of claims 1 to 11, the method according to any one of claims 12 to 14, or the method according to claim 15 is implemented.
